# EUROPÄISCHE PATENTSCHRIFT

(11) **EP 1 013 950 B1**
(45) Veröffentlichungstag und Bekanntmachung des Hinweises auf die Patenterteilung: **02.02.2005**
(21) Anmeldenummer: 99122569.9
(22) Anmeldetag: 12.11.1999
(51) Int. Cl.: F16C 29/08

(54) **Führungseinheit**
Guide unit
Unité de guidage

(30) Priorität: 23.12.1998 DE 19860027
(43) Veröffentlichungstag der Anmeldung: 28.06.2000
(73) Patentinhaber: Rexroth Star GmbH, 97424 Schweinfurt (DE)
(72) Erfinder: Dütsch, German, 97424 Schweinfurt (DE)
(74) Vertreter: Herzog, Markus, Dipl.-Phys. Dr.

(56) Entgegenhaltungen:
- GB-A- 2 010 413
- US-A- 4 886 375
- US-A- 5 399 023
- US-A- 5 634 722
- US-A- 5 678 927
- US-A- 5 871 283
- PATENT ABSTRACTS OF JAPAN vol. 1999, no. 12, 29. Oktober 1999 (1999-10-29) & JP 11 201163 A (NIPPON SEIKO KK), 27. Juli 1999 (1999-07-27)
- PATENT ABSTRACTS OF JAPAN vol. 1998, no. 06, 30. April 1998 (1998-04-30) & JP 10 037956 A (MITSUBISHI JIDOSHA TEKUNOMETARU KK;MITSUBISHI MOTORS CORP), 13. Februar 1998 (1998-02-13)

## Beschreibung

Die Erfindung betrifft eine Führungseinheit gemäß dem Oberbegriff von Anspruch 1.

Eine derartige Führungseinheit ist aus der JP-A-7-293560 bekannt.

Das Abdeckmittel, welches die Führungsschiene abdeckt, dient bei solchen Führungseinheiten zum Schutz der Führungsschiene vor Schmutz.

Es ist bekannt, als Abdeckmittel Faltenbalge zu verwenden; auch Blechwinkel sind denkbar.

Der Erfindung liegt die Aufgabe zugrunde eine gattungsgemäße Führungseinheit anzugegen, bei welcher, verglichen mit dem Stand der Technik, Raum für Lagerung oder/und Transport von Bauteilen der Führungseinheit eingespart werden kann. Darüber hinaus soll die Führungseinheit auch unter beengten räumlichen Bedingungen am Einbauort eingebaut werden können.

Zur Lösung dieser Aufgabe wird erfindungsgemäß eine Führungseinheit mit allen Merkmalen des Anspruchs 1 vorgeschlagen.

Dabei bildet das Abdeckmittel wenigstens auf einem Teil seiner Längserstreckung ein Abdeckmittelprofil, welches - in einem zur Längsachse orthogonalen Schnitt betrachtet - dem Schienenprofil in Abstand von diesem annähernd folgt. Dabei kann das Abdeckmittel einen im wesentlichen geschlossenen Profilhohlraum zwischen dem Schienenprofil und dem Abdeckprofil definieren, welcher die mindestens eine zwischen den beiden Führungswagen sich erstreckende Laufbahn der Führungsschiene enthält.

Das Abdeckmittelprofil ist aus mindestens zwei in Umfangsrichtung um die Längsachse aufeinander folgenden Teilprofilen zusammengesetzt "Zusammengesetzt" soll dabei sagen, daß die Teilprofile gesondert hergestellt sein können und mit ihren Rändern oder Kanten aneinander anliegen. "Zusammengesetzt" soll aber auch umfassen, daß die U-Profilteile aneinander einstückig anschließen oder scharnierartig miteinander verbunden sind.

Der Abschluß des Profilhohlraums kann dadurch erreicht werden, daß der Profilhohlraum durch Engspaltbildung und/oder Kontaktzonenbildung zwischen der Führungsschiene und dem Abdeckmittel abgeschlossen ist, nach Wunsch im wesentlichen dicht abgeschlossen ist. Dieser Abschluß des Profilhohlraums kann einerseits dazu dienen, die Beschmutzung der Führungsschiene aus dem Umgebungsraum zu verhindern und andererseits auch dazu beitragen, den Austritt von Schmiermittel zu verhindern, das zur Schmierung der Führungswagen und insbesondere der Eingriffsstellen des Führungswagens mit Laufbahnen dienende Schmiermittel am Austreten in den Umgebungsraum zu hindern. Beide Forderungen werden bei vielen Anwendungsfällen der Führungseinheit gestellt, insbesondere wenn die Führungseinheit im Roboterbau, im Werkzeugmaschinenbau, im Montagemaschinenbau und dergleichen eingesetzt wird.

Eine häufige Bauform von Führungswagen beruht auf dem Prinzip, daß der Führungswagen eine im Querschnitt annähernd rechteckige Führungsschiene U-förmig umgreift, so daß der Querschenkel des U-förmigen Führungswagens einer Kopffläche der Führungsschiene gegenübersteht, während die beiden Außenschenkel des U je einer Seitenfläche der Führungsschiene gegenüberstehen und eine der Kopffläche gegenüberliegende Basisfläche der Führungsschiene zur Befestigung auf einem Träger ausgebildet ist. Zur Führung können dabei endlose Wälzkörperschleifen vorgesehen sein, die mit je einer lastübertragenden Wälzkörperreihe in einer Laufbahn des Führungswagens und in einer Laufbahn der Führungsschiene angeordnet sind. Als Wälzkörper kommen Kugeln, Nadeln und Rollen u. dgl. in Frage. Bei einer solchen Gestaltung wird man das Abdeckmittelprofil bevorzugt als ein U-Profil ausführen, wobei die U-Schenkelenden des Abdeckmittelprofils an der Führungsschiene dichtend anliegen können.

Wenn in Umfangsrichtung aufeinander folgende Teilprofile des Abdeckmittelprofils um zur Längsachse parallele Gelenkachsen gelenkig miteinander verbunden sind, dann ergibt sich die Möglichkeit, das Abdeckmittelprofil in einem annähernd flachgelegten Zustand zu lagern und zu versenden, wodurch Lagerraum und Transportraum eingespart wird. Ein weiterer Vorteil ist, daß flachgelegte Abdeckmittelprofile auch unter beengten räumlichen Bedingungen am Einbauort eingebaut werden können, beispielsweise dann, wenn auf zwei oder mehreren aufeinander folgenden Führungswagen bereits ein Tisch montiert ist. In diesem Fall kann ein flachgelegtes Abdeckmittelprofil in flachgelegter Form durch einen Spalt zwischen Führungsschiene und Tisch eingeführt und anschließend durch Schwenken der Teilprofile um die Gelenkachsen in Abdeckstellung zu der Führungsschiene gebracht werden.

Es ist denkbar, daß das Abdeckmittelprofil aus mindestens zwei in Längsrichtung aneinander anschließenden Abdeckprofilabschnitten zusammengesetzt ist.

Auf eine exakte Festlegung der Länge des Abdeckmittelprofils kann verzichtet werden, wenn das Abdeckmittelprofil Längenausgleichsmittel zur Anpassung an Abstandsvariationen zwischen den beiden Führungswagen besitzt.

Das Abdeckmittel kann in der Nähe mindestens eines Führungswagens ein Abdeckmittelanschlußelement zur Herstellung der Mitnahmeverbindung mit dem jeweiligen Führungswagen aufweisen. Hier gibt es nun eine Reihe von Ausführungsmöglichkeiten. Es ist grundsätzlich denkbar, das Abdeckmittelprofil an den zugehörigen Führungswagen auf deren zur Längsrichtung parallel verlaufenden Seitenflächen anzubringen, beispielsweise durch Aufklipsen. Bei einer solchen Lösung muß allerdings darauf geachtet werden, daß das Abdeckmittelprofil, wenn es an einem Querschenkel eines U-förmigen Führungswagens anliegt, die Verbindung des Führungswagens mit einem Tisch stören könnte. Eine bevorzugte Ausführungsform sieht deshalb vor, daß das Abdeckmittelprofil innerhalb des Umrißes der Führungswagen untergebracht wird.

Das Abdeckmittelprofil kann an einem oder an beiden Enden mit einem Abdeckmittelanschlußelement zum Anschluß an den jeweils zugehörigen Führungswagen ausgeführt sein. Man kann daran denken, die Anschlußelemente beide starr an dem Abdeckmittelprofil anzubringen. Damit wird das Abdeckmittel allerdings nur für Normlösungen verwendbar, bei denen der Abstand aufeinander folgender Führungswagen fest vorgegeben ist. Häufig variiert der Abstand zwischen aufeinander folgenden Führungswagen. Um solchem variierendem Abstand gerecht zu werden, gibt es wiederum verschiedene Lösungen: Man kann beispielsweise das Abdeckmittelprofil aus zwei Abdeckprofilabschnitten zusammensetzen, die jeweils nur an einem Ende mit einem Abdeckmittelanschlußelement verbunden sind. Man kann solche Abdeckprofilabschnitte mit daran starr angebrachtem Abdeckmittelanschlußelement, beispielsweise mit der jeweils größtnotwendigen Länge aus Kunststoff spritzen und dann den einen oder die beiden Abdeckprofilabschnitte an dem von dem jeweiligen Abdeckmittelanschlußelement entfernten Ende kürzen, so daß die Summe der Längen beider Abdeckprofilabschnitte dem Abstand aufeinanderfolgender Führungswagen entspricht. Man kann dann an den zusammenstoßenden Enden der beiden Abdeckprofilabschnitte ein Kupplungsteil ggf. in Verbindung mit einer Dichtung anbringen.

Man kann aber auch die Abdeckmittelanschlußelemente und die Abdeckmittelprofile getrennt herstellen. Dieses getrennte Herstellen bringt den Vorteil, daß das Abdeckmittelprofil dann als Meter- oder Stangenware bereitgestellt werden kann und die jeweils benötigte Länge hiervon abgeschnitten werden kann. Dies führt zu einer einfachen Herstellung, beispielsweise durch Intrusion oder Extrusion. Die Verbindung des Abdeckmittelanschlußelements mit dem Abdeckmittelprofil kann dann durch Zusammenschieben hergestellt werden. Auf diese Weise ist auch ein einfacher Längenausgleich zu gewinnen. Um eine derartige Handhabung zu ermöglichen, wird man das Abdeckmittelanschlußelement bevorzugt mit einem Mitnahmeteil und einem Profilfassungsteil ausführen, wobei letzterer mit dem Abdeckmittelprofil zusammenwirkt. Dabei kann der Profilfassungsteil zur Anlage an der Außenseite des Abdeckmittelprofils oder zum Zusammenwirken mit der Innenseite des Abdeckmittelprofils ausgeführt sein.

Der Profilfassungsteil kann zum grätschartigen Aufbringen auf das Abdeckmittelprofil ausgebildet sein. Dies ist besonders dann von Interesse, wenn das Abdeckmittelanschlußelement nur geringe Abmessung in Richtung der Längsachse besitzt, weil dann auch die Abdeckmittelanschlußelemente unter beengten räumlichen Einbauverhältnissen leicht eingebaut werden können.

Es ist möglich, daß zur Sicherung des dem Profilfassungsteil außen anliegenden Abdeckmittelprofils auf dem Profilfassungsteil ein dem Abdeckmittelprofil außen anliegendes Umklammerungsmittel vorgesehen ist. Dabei kann das Umklammerungsmittel annähernd U-förmig ausgebildet sein.

Das Abdeckmittelanschlußelement kann als Befestigungsteil einen Befestigungsflansch zum Anschrauben oder Anklipsen an einer zur Längsachse im wesentlichen orthogonalen Endfläche eines Führungswagens aufweisen. Eine von der Fertigung und vom Einbau her bevorzugte Ausführungsform besteht darin, daß an jedem von zwei aufeinander unmittelbar folgenden Führungswagen an deren einander zugekehrten Enden jeweils ein Abdeckmittelanschlußelement angeordnet ist und daß sich zwischen den beiden Abdeckmittelanschlußelementen mindestens ein gesonderter Abdeckprofilabschnitt erstreckt.

Wird das Abdeckmittelprofil zwischen zwei aufeinanderfolgenden Führungswagen durch deren großen Abstand sehr lang, so kann es notwendig sein, daß das Abdeckmittelprofil an mittlerer Stelle zwischen den beiden Führungswagen stabilisiert wird, insbesondere dann, wenn auf eine dichte, insbesondere schmieröldichte Abdeckung Wert gelegt wird. Das Stabilisierungsmittel kann dabei gleichzeitig ein Kupplungsmittel zwischen zwei unmittelbar aneinander anschließenden Abdeckprofilabschnitten bilden.

Wenn ein Abdeckmittelprofil und ein Abdeckmittelanschlußelement gesondert hergestellt und erst später, insbesondere beim Einbau in die Führungseinheit, miteinander verbunden werden, so kann der Zusammenhalt im Betrieb dadurch gefördert werden, daß das Profilfassungsteil mit dem Abdeckmittelprofil verrastbar ist.

Der Längenausgleich, der insbesondere der Feinanpassung des Abdeckmittels an den Abstand aufeinander folgender Führungswagen dienen soll, kann dadurch erreicht werden, daß das Längenausgleichsmittel durch eine Schiebestrecke an einem Abdeckmittelanschlußelement und/oder zwischen zwei aneinander anschließenden Abdeckprofilabschnitten ausgebildet ist.

Innerhalb des Abdeckmittels kann Schmiermittel untergebracht sein, welches der Schmierung der mindestens einen Laufbahn dient. Wenn die Laufbahn auf solche Weise geschmiert wird, so erübrigt es sich unter Umständen, den Führungsteilen der Führungswagen, welche auf der jeweiligen Laufbahn laufen, Schmierstoff zuzuführen. Es ergibt sich dann der Vorteil, daß Schmiermittelversorgungssysteme innerhalb der Führungswagen unter Umständen vermieden werden können. Dieser Vorteil ist insofern bedeutend, als die Ausbildung der Schmiermittelversorgung innerhalb von Führungswagen wegen beengter Raumverhältnisse schwierig sein kann, insbesondere bei Führungswagen, die mit Wälzkörperschleifen ausgeführt sind.

Innerhalb der Abdeckmittel steht in der Regel reichlicher Unterbringungsraum für Schmierstoffe zur Verfügung, so daß für eine Langzeitschmierung oder sogar eine Lebensdauerschmierung gesorgt werden kann. Es soll aber nicht ausgeschlossen werden, daß eine Schmiermittelnachfüllung erfolgt. In diesem Fall können z.B. an dem Abdeckmittelprofil leicht Anschlußnippel oder dergleichen angebracht werden.

Als Schmiermittel kommen sowohl hochviskose Schmierfette als auch niedrigviskose Schmieröle in Frage. Je niedriger die Viskosität eines Schmieröl ist umso sorgfältiger muß natürlich die Abdichtung sein.

Soll mit Schmieröl geschmiert werden, so ist es möglich, daß innerhalb des Abdeckmittels mindestens ein poröser und schmierölhaltiger Ölverteilerkörper untergebracht ist. Dieser Ölverteilerkörper kann in Schmierölabgabekontakt (Schleckkontakt) mit einer Laufbahn der Führungsschiene stehen.

Bestehtauch innerhalb des Führungswagens Schmierölbedarf, so kann dafür gesorgt werden, daß das Schmiermittel innerhalb des Abdeckmittels Zugang zu Schmiermittelbedarfsstellen innerhalb eines Führungswagens hat.

Wenn das Abdeckmittel zur Erzielung guter Abdichtung in schleifendem Eingriff mit Berührungszonen der Führungsschiene steht, so kann es sich für die Lebensdauer der Abdeckung der Führungsschiene als vorteilhaft erweisen, wenn das Schmiermittel innerhalb des Abdeckmittels Zugang zu einer Engstelle oder einer Kontaktzone zwischen der Führungsschiene und dem Abdeckmittel hat.

Die Ölverteilerkörper können grundsätzlich über die ganze Länge des Abstands zwischen zwei aufeinander folgenden Führungswagen erstreckt sein. Auf diese Weise liegt schon in dem Ölverteilerkörper eine große Menge Schmieröl vor, die für eine Langzeitschmierung oder eine Lebensdauerschmierung ausreichen kann. Es soll aber nicht ausgeschlossen sein, daß der Ölverteilerkörper in schmierölleitender Verbindung mit einem Vorratsraum für ungebundenes Schmieröl steht. Auf diese Weise wird die verfügbare Schmierölmenge noch vergrößert und der zeitliche Abstand zwischen aufeinander folgenden Schmierölergänzungen vergrößert. Wenn ein Ölverteilerkörper beispielsweise in Leistenform an dem Abdeckmittelprofil angebracht ist, so kann eine innere Vorspannung des Abdeckmittelprofils oder auch eine durch äußere Vorspannmittel aufgebrachte Vorspannung dafür sorgen, daß der Ölverteilerkörper stets in schmierölabgebendem Kontakt gegen die Laufbahn gedrückt wird.

Bei großer Länge des Abstands zwischen aufeinander folgenden Führungswagen kann es erwünscht sein, den Ölverteilerkörper - etwa durch Ausnehmungen - nur über einen Teil dieser Länge an der Laufbahn anliegen zu lassen, um auf diese Weise eine zu große Laufreibung zu verhindern.

Die Teile des Abdeckmittels können aus Kunststoff oder Metall gespritzt, gegossen, extrudiert, gezogen oder gebogen werden.

Bei den oben bereits erwähnten Führungswagen mit Wälzkörperumlaufschleifen in einem U-förmigen Wagenkörper ist der Wagenkörper bisher an beiden Enden mit einem Dichtelement ausgeführt, so daß das Schmiermittel innerhalb des Wagenkörpers auf den Längsbereich des Wagenkörpers beschränkt ist und kein Schmieröl an den vom Wagenkörper jeweils nicht bedeckten Führungsschienenabschnitten auftritt. Bei erfindungsgemäßer Ausführung ist es möglich, auf die dem Zwischenraum zwischen aufeinander folgenden Führungswagen zugekehrten Dichtelemente der Führungswagen zu verzichten, wenn der vom Abdeckmittel eingeschlossene Raum schmiermitteldicht ausgeführt ist.

Es besteht die Möglichkeit, an dem Abdeckmittel mindestens eine Gleitfläche vorzusehen, welche in Gleiteingriff mit einer Gleitbahn der Führungsschiene steht. Gegenüber der ebenfalls denkbaren Ausführungsform, bei welcher das Abdeckmittel nur mittelbar über die Führungswagen auf der Führungsschiene geführt ist, bringt die Lösung mit Gleitfläche am Abdeckmittel und Gleitbahn an der Führungsschiene, welche in Gleiteingriff stehen, den Vorteil, daß man auch bei sehr großen Abständen zwischen zwei aufeinander folgenden Führungswagen Verformungen des Abdeckmittels vermeiden kann, indem man dieses an einer oder mehreren Stellen in Gleieingriff mit der Gleitbahn der Führungsschiene bringt. Dank der Herstellung dieses Gleiteingriffs kann das Abdeckmittel strukturschwächer ausgebildet werden, ohne daß es der Gefahr einer Verformung unterliegt, auch wenn sehr große Abstände zwischen aufeinander folgenden Führungswagen zu überbrücken sind.

Die Gleitbahn, mit welcher eine oder mehrere Gleitflächen des Abdeckmittels in Gleiteingriff gebracht werden sollen, kann von einer Laufbahn der Führungssschiene gebildet sein, einer Laufbahn also, auf welcher der Führungswagen selbst rollend oder gleitend läuft.

Da aber an dem Querschnittsumriß der Führungsschiene auch Umfangsabschnitte größeren Ausmaßes zur Verfügung stehen, welche von den Laufbahnen bzw. der Laufbahn nicht in Anspruch genommen werden, ist es auch denkbar, daß die Gleitbahn für den Eingriff einer Gleitfläche des Abdeckmittels von der Laufbahn bzw. von den Laufbahnen für die Führungswagen gesondert ist. Die erstere Möglichkeit hat den Vorteil, daß man neben den für die Führung des bzw. der Führungswagen ohnehin benötigten Laufbahn bzw. Laufbahnen keine weiteren Maßnahmen an der Führungsschiene zur Bildung der Gleitbahn bzw. Gleitbahnen treffen muß. Die zweitere Möglichkeit hat den Vorteil, daß eine Laufbahnabnutzung durch den Gleiteingriff mit einer oder mehreren Gleitflächen des Abdeckmittels vermieden wird und eine Schmierung der Laufbahn allein auf die Bedürfnisse der Führungswagenführung abgestellt werden kann.

In den bisher besprochenen Ausführungsbeispielen der Erfindung war die Möglichkeit angedeutet, daß das Abdeckmittel mit mindestens einem der ihm angrenzenden Führungswagen durch Befestigung am jeweiligen Führungswagen verbunden ist.

Demgegenüber ist eine unter bestimmten Umständen bevorzugte Ausführungsform darin zu sehen, daß das Abdeckmittel in lediglich druckübertragender Anschlagverbindung mit mindestens einem der Führungswagen steht. Zum Verständnis dieser Maßnahme ist ins Gedächtnis zu rufen, daß zwei aufeinander folgende Führungswagen, zwischen denen ein Abdeckmittel angebracht werden soll, häufig bereits durch eine Brücke, einen Tisch oder ein anderes Objekt miteinander verbunden und damit auf Abstand gehalten sind, so daß eine Abstandhaltefunktion des Abdeckmittels ohnehin nicht erforderlich ist. Unter dieser Voraussetzung ist eine hinreichende Positionierung dann gewährleistet, wenn das Abdeckmittel einerseits durch mindestens einen, vorzugsweise durch mehrere Gleitflächen auf der Führungsschiene geführt und andererseits einfach in druckübertragender Anschlagverbindung mit den einander zugekehrten Endteilen der Führungswagen steht. Diese Ausführungsform hat den weiteren Vorteil, daß das Anbringen des Abdeckmittels sehr erleichtert ist; man braucht nur noch das Abdeckmittel mit seiner Führungsfläche bzw. seinen Führungsflächen in Gleiteingriff mit der Gleitbahn bzw. den Gleitbahnen der Führungsschiene zu bringen und die Führungswagen mit ihren einander zugekehrten Endteilen bis auf Anschlag an die jeweils zugehörigen Enden des Abdeckmittels anzunähern und ihren so erhaltenen Abstand zu fixieren. Dabei kann das Abdeckmittel von mindestens einem der Führungswagen querkraftmäßig entkoppelt sein; vorzugsweise ist es von beiden Führungswagen querkraftmäßig entkoppelt. Die Ausdrucksweise "querkraftmäßig entkoppelt" soll dabei bedeuten, daß das jeweilige Ende des Abdeckmittels gegenüber dem zugehörigen Endteil eines Führunswagens zumindest geringfügig in Querrichtung zur Führungsschiene verlagerbar ist. Auf diese Weise werden Doppelpassungen vermieden, die sonst entstehen könnten, wenn einerseits das Abdeckmittel unmittelbar an der Führungsschiene durch Gleitflächen-Gleitbahneingriff geführt ist und andererseits ein oder beide Enden des Abdeckmittels an einem bzw. beiden Führungswagen befestigt sind.

Wenn der Abstand zwischen zwei aufeinander folgenden Führungswagen durch ein mit beiden Führungswagen verbundenes Objekt, z. B. mit einem Tisch, vorbestimmt ist, so muß im Hinblick auf eine optimale Kapselung des jeweils zwischen den beiden Führungswagen liegenden Führungsschienenabschnitts dafür gesorgt werden, daß die Länge des Abdeckmittels möglichst genau dem lichten Abstand zwischen zwei einander gegenüberstehenden Endflächen der beiden Führungswagen entspricht, insbesondere dem Abstand zwischen den einander zugekehrten Endflächen von Endteilen der beiden Führungswagen. Es wird deshalb empfohlen, daß das Abdeckmittel unter Vorspannung an den einander zugekehrten Endteilen der Führungswagen anliegt. Dann ist es möglich, die Länge des Abdeckmittels in Anpassung an den durch Fremdmittel bestimmten Abstand der beiden Führungswagen elastisch zu verkürzen und gleichzeitig für eine dichte Anlage der Enden des Abdeckmittels an den Endflächen der Führungswagen zu sorgen.

Es wird je nach Anwendungsfall empfohlen, die Gleitfläche des Abdeckmittels oder/und die Gleitbahn der Führungsschiene mit Schmiermittel zu versorgen. Ist die Gleitbahn identisch mit mindestens einer Laufbahn der Führungsschiene und ist die Laufbahn ihrerseits zu schmieren, so gelingt es, durch Schmieren der Laufbahn auch den leichtgängigen Lauf der Gleitfläche des Abdeckmittels sicher zu stellen.

Das Abdeckmittel bietet bei entsprechendem Abstand von der abzudeckenden Führungsschiene ausreichenden Raum für die Unterbringung einer Schmiermittelversorgung, sei es, daß die Laufbahn des Führungswagens geschmiert werden soll, sei es, daß eine Gleitbahn für das Abdeckmittel geschmiert werden soll und sei es auch, daß bestimmte Funktionsteile innerhalb eines Führungswagens geschmiert werden sollen, z. B. eine Kugelschleife oder eine Rollenschleife. Wenn an dieser Stelle von Schmiermittelversorgung die Rede ist, so soll damit einerseits der Fall umfaßt sein, daß ein Schmiermittelvorrat für längere Zeit, u. U. für die gesamte Lebenszeit der Führungseinheit, innerhalb des Abdeckmittels untergebracht ist und nötigenfalls auch die Verteilungsmittel, um das Schmiermittel an schmierbedürftige Stellen zu bringen. Erfaßt sein soll durch den Ausdruck "Schmiermittelversorgung" an dieser Stelle auch die Möglichkeit, daß Schmiermittel, gleichgültig ob Schmieröl oder Schmierfett, ständig von außen beispielsweise über eine flexible Leitung an das Abdeckmittel zugeführt wird und daß innerhalb oder an dem Abdeckmittel Verteilungsmittel angebracht sind, um das Schmiermittel zu den jeweils schmierbedürftigen Stellen zu führen.

Das Abdeckmittel kann aus mindestens zwei in Richtung der Längsachse aneinander anschließenden Abdeckmittelteilen bestehen. Dies bedeutet u.a. folgendes: Man kann mindestens ein führungswagennahes Ende eines Abdeckmittels gesondert von dem die Restlänge überbrückenden Teil des Abdeckmittels herstellen. Dann kann das dem Führungswagen nahe Abdeckmittelteil an seine Anlagefunktion bezüglich des Führungswagens angepaßt werden, und das für die Restüberdeckung der Führungsschiene bestimmte Abdeckmittelteil kann auf einfachste Weise als ein Abdeckmittelprofil hergestellt werden, welches auf seiner gesamten Länge konstanten Querschnitt besitzt und deshalb durch Herstellungsvorgänge wie Extrudieren, Intrudieren, Strangpressen, Ziehen oder Biegen leicht in beliebiger Länge hergestellt werden kann.

Weiterhin soll die Aussage "mindestens zwei aneinander anschließende Abdeckmittelteile" auch den Fall umfassen, daß ein den größten Teil der Länge zwischen zwei aufeinander folgenden Führungswagen bedeckendes Teil des Abdeckmittels und zwei Abdeckmittelendstücke, diese angepaßt an ihre Anlagefunktion bezüglich der Führungswagen, in Längsrichtung aufeinander folgen. Weiterhin soll auch der Fall umfaßt sein, daß zwei oder mehrere Teile des Abdeckmittels von größerer Länge aufeinander folgen, beispielsweise dann, wenn man einen Vorrat von Standardlängsstücken des Abdeckmittels zur Verfügung hat und aus diesem Vorrat durch Reihenanordnung eine bestimmte Länge zwischen zwei aufeinander folgenden Führungswagen überbrücken will. Man braucht dann nur den vorgegebenen Abstand zwischen zwei Führungswagen zu messen und durch die Standardlänge der verfügbaren Abdeckmittelteile zu teilen. Die dabei ergebende Zahl ist die Zahl der notwendigen Abdeckmittelteile. Dem Rest entsprechend wird ein weiteres Abdeckmittelteil gekürzt und ebenfalls in die Reihenanordnung mit einbezogen. Diese Art der Zusammensetzung eines Abdeckmittels wird insbesondere dann möglich, wenn Gleitflächen des Abdeckmittels jeweils im Bereich der Stoßstellen zwischen zwei aufeinander folgenden Abdeckmittelteilen vorgesehen werden. Das Problem des Toleranzausgleichs kann dann dadurch gelöst werden, daß an mindestens einem der Abdeckmittelteile Vorspannmittel vorgesehen werden, so daß die Reihe von Abdeckmittelteilen in Anpassung an die jeweilige lichte Länge zwischen zwei aufeinander folgenden Führungswagen komprimiert werden kann.

Eine häufige Ausführungsform wird sein, daß das Abdeckmittel mindestens ein Abdeckmittelprofil und mindestens ein Abdeckmittelendstück umfaßt, welches zur Anlage an einem Führungswagen ausgebildet ist. Dabei kann zwischen dem Abdeckmittelprofil und dem Abdeckmittelendstück ein Federmittel vorgesehen sein, welches komprimierbar ist. Dieses Federmittel kann insbesondere an dem Abdeckmittelendstück angebracht werden, welches ja ohnehin nicht durch Extrusionsvorgang, Ziehvorgang od. dgl. hergestellt werden kann, sondern der Herstellung durch einen Gieß- oder Spritzgießvorgang bedarf. Bei einem solchen Gieß- oder Spritzgießvorgang kann das Federmittel aus dem Material des Abdeckmittelendstücks einstückig und mit diesem zusammenhängend hergestellt werden.

Wenn das Abdeckmittel aus mindestens zwei in Richtung der Längsachse aufeinander folgenden Abdeckprofilabschnitten größerer Länge besteht, so können diese Abdeckprofilabschnitte durch ein Kupplungsstück miteinander verbunden sein. Dazu brauchen an den Abdeckprofilabschnitten keine besonderen Kupplungsmaßnahmen getroffen zu werden. Es genügt, das Kupplungsstück zur Kupplung auszubilden und die Abdeckprofilabschnitte mittels des Kupplungsstücks zusammenzustecken. Das Kupplungsstück kann also ein von den beiden Abdeckprofilabschnitten gesondertes Kupplungsstück sein, und etwa erforderliche Federmittel können auch an dem Kupplungsstück angebracht werden, wobei sie wiederum einstückig aus dem Material des Kupplungsstücks durch Gießen oder Spritzguß angeformt werden können. Zusammenfassend kann gesagt werden, daß das Abdeckmittel mindestens ein Abdeckmittelprofil und mindestens ein Aufsteckteil umfassen kann. "Aufsteckteil" bedeutet also in diesem Zusammenhang sowohl Kupplungsstück als auch Abdeckmittelendstück. In jedem Fall kann an dem Aufsteckteil mindestens eine Einstecktasche ausgebildet sein, welche das zugehörige Ende eines Abdeckmittelprofils aufnimmt. Selbstverständlich ist es wünschenswert, die Einstecktaschen an einem Kupplungsstück und an einem Abdeckmittelendstück profilmäßig gleich auszuformen, so daß jedes Aufsteckstück für jedes Abdeckmittelprofil passend ist.

Das Abdeckmittelprofil kann als ein Hohlwandprofil ausgebildet sein. Die Herstellung des Abdeckmittelprofils als Hohlwandprofil bringt den Vorteil, daß ohne wesentliche Gewichtserhöhung eine Versteifung des Abdeckmittelprofils erzielt wird; diese Versteifung ist sowohl im Hinblick auf die Formbeständigkeit des Abdeckmittelprofils gegenüber Schwerkrafteinwirkung als auch im Hinblick auf verbesserten Schutz der Führungsschiene gegen Stöße von außen erwünscht.

Die Herstellung eines Abdeckmittelprofils als Hohlwandprofil bietet auch verschiedene Möglichkeiten des Zusammensteckens von Aufsteckteilen, wie Abdeckmittelendstücken und Kupplungsstücken einerseits und Abdeckmittelprofilen andererseits. So kann an einem Aufsteckteil mindestens ein Steckvorsprung zum Einstecken in eine Hohlprofilkammer eines Hohlwandprofils vorgesehen sein.

Die Gleitfläche des Abdeckmittels zum Gleiten auf einer Gleitbahn der Führungsschiene kann grundsätzlich unmittelbar an einem Kupplungsstück oder einem Abdeckmittelendstück oder einem Abdeckmittelprofil gebildet sein.

Wenn die Gleitfläche des Abdeckmittels von einem gesonderten Gleitschuh gebildet wird, so hat dies den Vorteil, daß der gelegentlich einer raschen Abnutzung unterliegende Gleitschuh ausgetauscht werden kann, ohne daß das gesamte Abdeckmittel ausgetauscht werden muß. Entscheidet man sich dafür, die Gleitfläche eines Abdeckmittels an einen besonderen Gleitschuh bzw. Gleitschuhen anzubringen, so kann man Gleitschuhe grundsätzlich an Abdeckmittelprofilen anbringen oder an zugehörigen Aufsteckteilen, z. B. Kupplungsstücken oder Abdeckmittelendstücken. Aus praktischen Gründen ist es vorteilhaft, wenn man die Gleitschuhe an dem Abdeckmittelprofil anbringt, denn man kann bei der Profilherstellung leicht auch Halteprofilmittel zur Aufnahme eines oder mehrerer Gleitschuhe mitanformen.

Ein Gleitschuh kann sich grundsätzlich über einen wesentlichen Teil oder auch über die ganze Länge des Abstands zweier aufeinander folgender Führungswagen erstrecken. Es ist aber aus Gründen der Ökonomie und der Reibungsminimierung häufig erwünscht, daß man Gleitschuhe von wesentlich kürzerer Länge vorsieht, beispielsweise in einem Endbereich des Abdeckmittels nahe einem Führungswagen oder auch an mittlerer Stelle des Abstands zweier Führungswagen, wenn zur Verhinderung von Durchbiegung des Abdeckmittels Bedarf besteht. Im letzteren Fall wird man Gleitschuhe bevorzugt im Bereich eines Kupplungsstücks zwischen zwei aufeinander folgenden, an der Bildung des Abdeckmittels beteiligten Abdeckmittelprofilabschnitten anbringen.

Grundsätzlich kann der Gleitschuh als ein Schmierkörper zum Schmieren einer Laufbahn oder/und einer Gleitbahn ausgebildet sein. Beispielsweise kann der Gleitschuh aus einem Kunststoff bestehen, welcher einerseits hart genug ist, um eine stabilisierende Führungsfunktion zu übernehmen, andererseits aber porös ist und festes oder flüssiges Schmiermittel in seinen Poren enthält.

Die Schmierversorgung ist aber nicht an die Verwendung des Gleitschuhs als Schmierkörper gebunden; es ist vielmehr möglich, daß das Schmiermittel ohne Heranziehung des Gleitschuhs auf die jeweils schmierbedürftigen Flächen aufgebracht wird; so ist es möglich, daß in Richtung der Längsachse neben einem Gleitschuh mindestens ein Schmiermittelspenderkörper an dem Abdeckmittel vorgesehen ist, welcher Schmiermittelspenderkörper zur Schmiermittelversorgung einer Laufbahn oder/und einer Gleitbahn geeignet ist. In diesem Fall können die Materialeigenschaften des Schmiermittelspenderkörpers ohne Rücksicht auf die Führungsfunktion speziell auf die Speicherung und Abgabe von Schmiermittel abgestellt werden.

An dem Abdeckmittel können Längsdichtungsleisten angebracht sein, welche in Abdichtposition gegenüber der Führungsschiene angeordnet sind und zusammen mit der Führungsschiene eine Kapselung für mindestens eine Laufbahn oder/und mindestens eine Gleitbahn bilden. Wenn hier von Abdichtung gesprochen wird, so ist dabei sowohl eine Abdichtung durch körperlichen Kontakt gemeint als auch eine Abdichtung, bei der die Abdeckleisten so nahe an die jeweilige Fläche der Führungsschiene heranreichen, daß der noch bestehende Spalt, ohne daß es zu einer gleitenden Berührung kommt, klein genug ist, um das Eintreten von Schmutz zu verhindern. Gerade dann, wenn das Abdeckmittel unmittelbar auf der Führungsschiene durch Zusammenwirken von Gleitflächen und Gleitbahnen unabhängig von den Führungswagen geführt ist, läßt sich eine perfekte Abdichtung erwarten, da die Gefahr eines Dichtverlusts durch Doppelpassung reduziert ist.

Wie schon weiter oben ausgeführt, ist das Äbdeckmittel häufig U-förmig ausgeführt, um eine Führungsschiene mit Kopfteil, Seitenflächen und Fußteil abzudecken. Dabei wird es für viele Anwendungsfälle ausreichend und auch erwünscht sein, die Seitenschenkel des Abdeckmittels nicht ganz bis zum Fußteil und nicht bis zu einer den Fußteil tragenden Basis herab reichen zu lassen.

Andererseits sind aber auch Situationen nicht auszuschließen, in denen man die Seitenteile der Abdeckmittel doch bis zum Fußteil oder bis zu einer das Fußteil tragenden Basis herab reichen lassen will. Zu diesem Zweck kann man an dem Abdeckmittel Halterungsmittel zur Anbringung von Abdeckergänzungsmitteln vorsehen und gewinnt dabei den Vorteil, daß ein wesentlicher Bestandteil des Abdeckmittels, nämlich der U-förmige Profilkörper erhalten bleiben kann und bei Bedarf nur durch die Abdeckergänzungsmittel ergänzt zu werden braucht. Diese Abdeckergänzungsmittel sind nicht nur zur Abdeckung eines unbedeckten Fußteils der Führungsschiene und zur Abdichtung gegenüber einer die Führungsschiene tragenden Basis vorgesehen und geeignet. Es ist vielmehr auch denkbar, die Abdeckergänzungsmittel so zu gestalten, daß sie einem mit dem Abdeckmittel zusammengefügten Führungswagen eine seitliche Abdeckung bieten. Ferner kann ein Abdeckergänzungsmittel auch zur Abdichtung gegenüber einem durch mindestens einen Führungswagen getragenen Objekt, insbesondere Tisch, ausgebildet sein. Auf diese Weise wird es möglich, durch ein Baukastensystem mit einer verhältnismäßig geringen Anzahl von Normteilen je nach Bedarf eine mehr oder minder vollständige Kapselung zu erzielen, die je nach Bedarf nur Teile der Führungsschiene abdeckt oder den Gesamtraum zwischen einer die Führungsschiene tragenden Basis und einem durch die Führungswagen getragenen Objekt kapselt, unter Umständen auch im Bereich der Führungswagen selbst.

Die Halterungsmittel zur Anbringung von Abdeckergänzungsmitteln können als Ergänzungsteilhalterungsprofil ausgebildet sein, das seinerseits an einem Abdeckmittelprofil angebracht ist, wo es im Zuge der Herstellung des Abdeckmittelprofils durch entsprechende Gestaltung von Ziehdüsen, Extrusionsdüsen od. dgl. leicht angeformt werden kann.

Zur Verbindung von Abdeckergänzungsmitteln mit einem Abdeckmittelprofil kann man Adapter vorsehen, welche mit einem Halterungsprofil des Abdeckmittels einerseits und mit einem Ankoppelungsprofil des Abdeckergänzungsmittels andererseits in Eingriff gebracht werden können, beispielsweise durch axiales Einschieben oder durch Einschnappen oder durch Einhaken. Dabei ist insbesondere daran gedacht, solche Adapter so zu gestalten, daß sie wahlweise zum Verbinden des Abdeckmittels mit verschiedenen Abdeckergänzunsmitteln eingesetzt werden können.

Auf die Möglichkeit, ein Abdeckmittel auch zur Unterbringung einer Schmierversorgung heranzuziehen, ist bereits hingewiesen worden. Nachzutragen ist aber noch die Möglichkeit, daß in dem Abdeckmittel ein Schmiermittelkanal untergebracht werden kann, welcher in Längsrichtung der Führungsschiene verläuft. Diese Möglichkeit der Unterbringung eines Schmiermittelkanals besteht insbesondere dann, wenn das Abdeckmittel mit Abdeckmittelprofilen hergestellt wird, die durch Extrusionstechnik, Intrusionstechnik, Stangpreßtechnik oder Ziehtechnik hergestellt werden.

Ist ein solcher Schmiermittelkanal vorhanden, so kann dieser in Schmiermittel leitender Verbindung mit einer Schmiermittellieferstelle oder/und mit einer Laufbahn oder/und mit einer Gleitbahn oder/und mit einer Schmiermittelanschlußöffnung mindestens eines Führungswagens stehen. Beispielsweise kann die Schmiermittellieferstelle über einen flexiblen Schlauch mit einer Schmiermittelpumpe oder einer Schmiermittelpresse oder einem unter Schwerkrafteinwirkung stehenden Schmiermittelvorrat stehen.

Da die Führungswagen häufig an ihren Endteilen eine zentrale Schmiermittelanschlußöffnung besitzen, in die bisher regelmäßig ein Schmiernippel eingesetzt wurde, empfiehlt es sich, einen Schmiermittelkanal so zu legen, daß er nach Zusammenbau eines Abdeckmittels mit zwei aufeinander folgenden Führungswagen in Achsflucht mit den zentralen axial gerichteten Schmiermittelanschlußöffnungen der Führungswagen steht. Die dichte Verbindung zwischen dem Schmiermittelkanal und den Schmiermittelanschlüssen in den Endstücken der Führungswagen können dabei derart stumpf ausgebildet sein, daß durch die Verbindung zwischen Schmiermittelkanal des Abdeckmittels einerseits und den Schmiermittelanschlüssen der Führungswagen andererseits die querkraftmäßige Entkopplung des Abdeckmittels und der Führungswagen nicht aufgehoben wird.

Die Verbindung des Schmiermittelkanals in dem Abdeckmittel mit einem Schmiermittelvorrat kann beispielsweise im Bereich eines Endstücks oder/und eines Kupplungsstücks hergestellt sein. Gerade im Bereich des Kupplungsstücks ist, da ja dort der jeweilige Führungswagen weit abliegt, eine unbeengte Möglichkeit für den Anschluß eines flexiblen Schlauchs od. dgl. gegeben.

Ist die Führungseinheit mit einem Linearantrieb verbunden, der die Führungswagen in Längsrichtung der Führungsschiene bzw. Führungsschienen transportieren soll, so ist häufig auch für diesen Linearantrieb Schmiermittelbedarf gegeben. Dies gilt beispielsweise dann, wenn als Linearantrieb ein Spindelantrieb und insbesondere ein Spindelantrieb mit einer Kugelgewindemutter zur Anwendung kommt. In solchen Fällen kann ein in das Abdeckmittel integrierter Schmiermittelkanal auch mit der Schmierversorgung des Linearantriebs in Verbindung stehen.

Die Abdichtung eines durch das Abdeckmittel geschaffenen gekapselten Raums in der Umgebung einer Führungsschiene ist durch in Achsrichtung der Führungsschiene verlaufende Dichtleisten noch nicht komplett. Abdichtbedarf besteht auch dort, wo das Abdeckmittel gegen einen Führungswagen stößt. Auch dort können Dichtmittel vorgesehen sein. Weiterhin können Dichtmittel auch dort vorgesehen sein, wo zwei aufeinander folgende Abdeckprofilabschnitte mit einem Kupplungsstück zusammen stoßen.

Man wird bemüht sein, solche Dichtmittel an Abdeckmittelendstücken oder an Kupplungsstücken anzubringen, da die Herstellung dieser Teile am ehesten eine einfache Anbringung von Dichtmitteln erlaubt.

Die bereits mehrfach angesprochenen Kupplungsstücke zwischen aufeinander folgenden Abdeckprofilabschnitten sind verhältnismäßig komplizierte Formgegenstände, und sie werden noch komplizierter, wenn, wie bereits angedeutet, im Bereich der Kupplungsstücke auch Schmiermittelkanäle und Abzweigungen von solchen Schmiermittelkanälen verlaufen. Um hier formtechnisch eine Erleichterung zu schaffen, wird vorgeschlagen, daß das Kupplungsstück aus zwei vorzugsweise identischen Formteilen zusammengesetzt ist, welche in einer zur Längsachse orthogonalen Verbindungsebene zusammenstoßen.

Das Abdeckmittel kann ein in sich geschlossener starrer Körper sein; insbesondere kann ein dem Abdeckmittel zugehöriges Abdeckmittelprofil in sich starr sein, z. B. U-förmig. Aus Gründen des erleichterten Herstellprozesses für das Abdeckmittel und des erleichterten Einbaus des Abdeckmittels in eine Führungseinheit wird aber auch in Betracht gezogen, daß das Abdeckmittel ein Abdeckmittelprofil mit einer Mehrzahl von in Umfangsrichtung um die Längsachse aneinander anschließenden Profilwandteilen umfaßt, welche gelenkig miteinander verbunden sind. Die Profilwandteile können dabei mit Gelenkteilen ausgeführt sein, welche ein Verschwenken der Profilwandteile relativ zueinander um zur Längsachse parallele Gelenkachsen gestatten. Diese Gelenkteile können durch Verschwenken relativ zueinander in eine Verrastungsstellung gebracht werden, in welcher die Profilwandteile eine zur Abdeckung der Führungsschiene geeignete Profilquerschnittsform definieren. Die Gelenkteile können miteinander durch axiales Zusammenschieben oder durch Einhaken verbunden werden.

Die beiliegenden Figuren erläutern die Erfindung anhand von Ausführungsbeispielen; es stellen dar:
- Fig. 1: eine Führungsschiene mit Führungswagen als eine Grundlage der Erfindung;
- Fig. 2: einen Schnitt nach Linie II-II der Fig. 1;
- Fig. 3: eine Seitenansicht einer erfindungsgemäßen Führungseinheit mit zwei Führungsschienen, jeweils zwei Führungswagen auf beiden Führungsschienen, einem durch die Führungswagen getragenen Tisch und einem Zwischenraum zwischen jeweils zwei aufeinander folgenden Führungswagen, der zum Einbau eines Abdeckmittels geeignet ist;
- Fig. 4: eine Endansicht in Pfeilrichtung IV der Fig. 3;
- Fig. 5: eine Endansicht in Pfeilrichtung V der Fig. 3 auf das Ende eines Führungswagens;
- Fig. 6: ein Abdeckmittelanschlußelement geeignet zum Anbau an die in Fig. 5 dargestellte Endfläche eines Führungswagens;
- Fig. 6a: ein Detail von Fig. 6;
- Fig. 7: einen möglichen Einbauvorgang für das Abdeckmittel bei einer Führungseinheit gemäß Fig. 3 im Schnitt nach Linie VII-VII der Fig. 4;
- Fig. 8: einen Schnitt nach Linie VIII-VIII der Fig. 7;
- Fig. 8a: ein Detail bei VIIIa von Fig. 8;
- Fig. 9: ein flachgelegtes Abdeckmittelprofil passend zum Abdeckmittelanschlußelement gemäß Fig. 6;
- Fig. 10: eine abgewandelte Ausführungsform eines Abdeckmittelanschlußelements als Alternative zu demjenigen nach Fig. 6;
- Fig. 10a: das Detail Xa von Fig. 10 in vergrößertem Maßstab;
- Fig. 11: ein abgewandeltes Abdeckmittelprofil als Alterntive zu demjenigen nach Fig. 9;
- Fig. 12: eine weitere abgewandelte Ausführungsform eines Abdeckmittelprofils mit einer Schmierölkammer;
- Fig. 13: einen Montagevorgang bei der Montage eines Abdeckmittels unter Verwendung von Abdeckmittelanschlußelementen gemäß Fig. 10;
- Fig. 14 und 15: Prinzipskizzen zur Erläuterung weiterer möglicher nicht erfindungsgemäßer Abwandlungen;
- Fig. 16: eine nicht erfindungsgemäße Ausführungsform, bei welcher ein Abdeckmittel unmittelbar auf einer Führungsschiene geführt ist und an dem Endteil eines Führungswagens ohne Zugverbindung und ohne Querverschiebesicherung stumpf anstößt;
- Fig. 17: eine nicht erfindungsgemäße Ausführungsform entsprechend Fig. 16, wobei man an dem unteren Ende des Abdeckmittels ein Abdeckmittelendstück erkennt;
- Fig. 18: eine nicht erfindungsgemäße Führungseinheit, bestehend aus zwei Baugruppen gemäß Fig. 16 in Verbindung mit einem Linearantrieb und einer Schmiermittelversorgung;
- Fig. 19: in vergrößertem Maßstab das Ende eines nicht der Erfindung zuzurechnenden Abdeckmittelprofils mit einem Gleitschuh für den Fall einer Führungsschiene mit Kugellaufbahnen;
- Fig. 19a: einen Gleitschuh für den Fall einer Führungsschiene mit Rollenlaufbahnen;
- Fig. 20: ein Abdeckmittelendstück mit seiner einem Abdeckmittelprofil zugekehrten Seite;
- Fig. 21: das Abdeckmittelendstück von Fig. 20 mit seiner einem Führungswagen zugekehrten Seite;
- Fig. 22: einen Schnitt nach Linie XXII-XXII der Fig. 20;
- Fig. 23: eine abgewandelte Ausführungsform eines Abdeckmittelendstücks mit seiner einem Führungswagen zugekehrten Seite;
- Fig. 24: ein Kupplungsstück zur Verbindung zweier aufeinander folgender Abdeckprofilabschnitte;
- Fig. 25: ein Bauteil zur Bildung eines Kupplungsstücks gemäß Fig. 24;
- Fig. 26: eine weitere Ausführungsform eines Kupplungsstücks;
- Fig. 27: ein Bauteil zur Bildung des Kupplungsstücks gemäß Fig. 26;
- Fig. 28: ein Abdeckmittel zusammengesetzt aus mehreren in Umfangsrichtung um die Führungsschiene aufeinander folgenden Profilwandteilen;
- Fig. 29: den Vorgang des Zusammensetzens zweier aufeinander folgender Profilwandteile;
- Fig. 30: eine weitere Form des Zusammenbaus mehrerer in Umfangsrichtung um die Führungsschiene aufeinander folgender Profilwandteile;
- Fig. 31: ein nicht von Anspruch 1 umfasstes Abdeckmittel zur Abdeckung einer Führungsschiene ergänzt durch Abdeckmittelergänzungen im Bereich des Fußteils der Führungsschiene;
- Fig. 32: ein nicht von Anspruch 1 umfasstes Abdeckmittel profil mit einem Ergänzungsteilhalterungsprofil zum Anschluß eines Abdeckergänzungsmittels;
- Fig. 32a: ein Adapter als Zwischenglied zwischen einem Abdeckmittel und einem Abdeckergänzungsmittel;
- Fig. 32b: ein Abdeckergänzungsmittel zur Abdeckung eines Führungsschienenfußteils;
- Fig. 32c und Fig. 32d: Abdeckergänzungsmittel zur Abdeckung von Führungswagen;
- Fig. 33: eine nicht von Anspruch 1 umfasste Führungseinheit mit seitlicher Abdeckung eines Führungswagens und
- Fig. 34: eine nicht von Anspruch 1 umfasste Führungseinheit mit verbreiterten Führungswagen und seitlicher Abdeckung dieses Führungswagens.

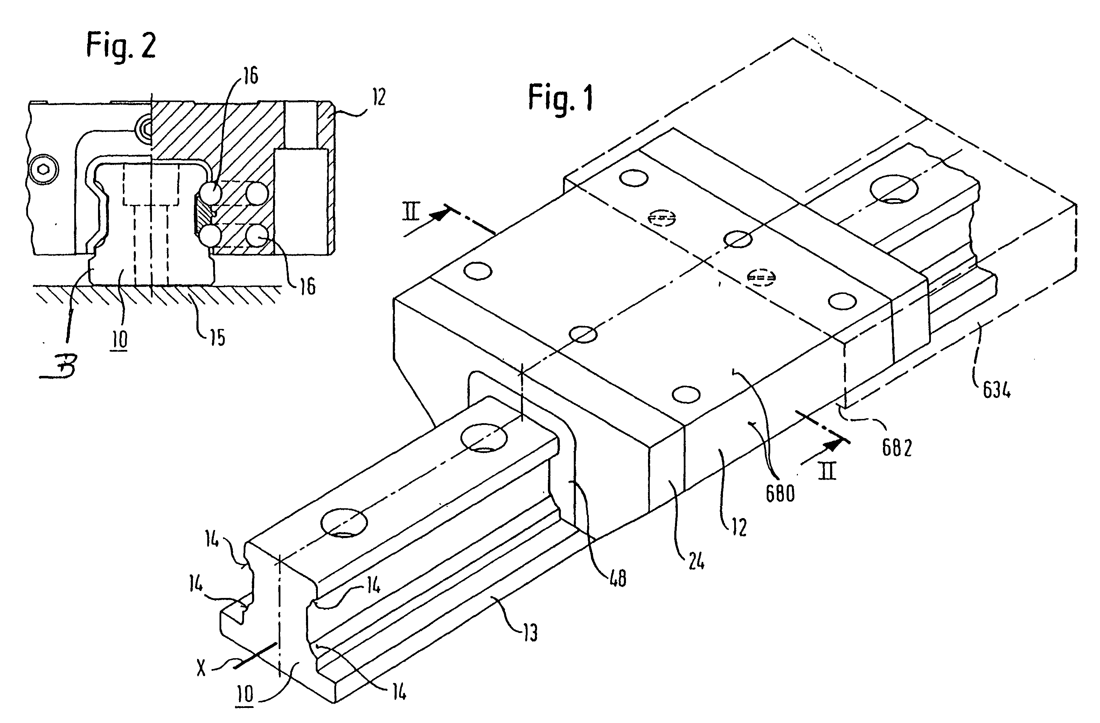

In den Fig. 1b bis 19, 31, 32, 33 und 34 werden Merkmale für vorteilhafte Weiterbildungen der vorliegenden Erfindung an Ausführungsformen von Abdeckmittelprofilen erläutert, welche von Anspruch 1 nicht umfasst sind.

Die Fig. 1 und 2 sind aus der DE-OS 36 20 571 A1, der entsprechenden EP 0 211 243 A2 und der entsprechenden US 4 743 124 entnommen. Für weitere Informationen über den Aufbau der Baugruppe nach den Fig. 1 und 2 wird auf diese Schriften verwiesen.

In Fig. 1 ist eine Führungsschiene mit 10 bezeichnet; sie weist einen Basisteil B auf, der auf einem Träger 15 befestigt ist. Auf dieser Führungsschiene läuft ein Führungswagen 12. Der Führungswagen 12 ist auf Laufbahnen 14 der Führungsschiene 10 mittels Kugelschleifen 16 geführt, wie in den oben genannten Patentschriften im einzelnen erläutert.

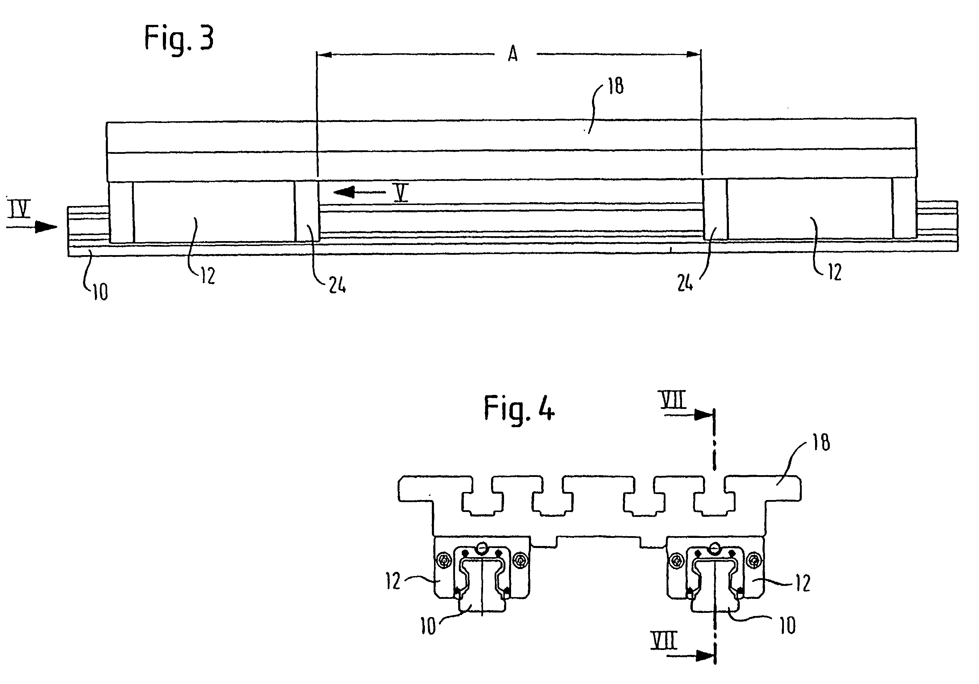

In Fig. 3 und 4 sind auf zwei parallel laufenden Führungsschienen 10 je zwei Führungswagen 12 geführt, auf denen ein Objekttisch 18 befestigt ist. Der Abstand der jeweils auf einer Führungsschiene 10 laufenden Führungswagen 12 ist durch den Führungstisch bestimmt und mit A bezeichnet. Im Bereich des Abstands A in Fig. 3 soll die Führungsschiene 10 durch ein ganz allgemein mit 20 bezeichnetes Abdeckmittel abgedeckt werden.

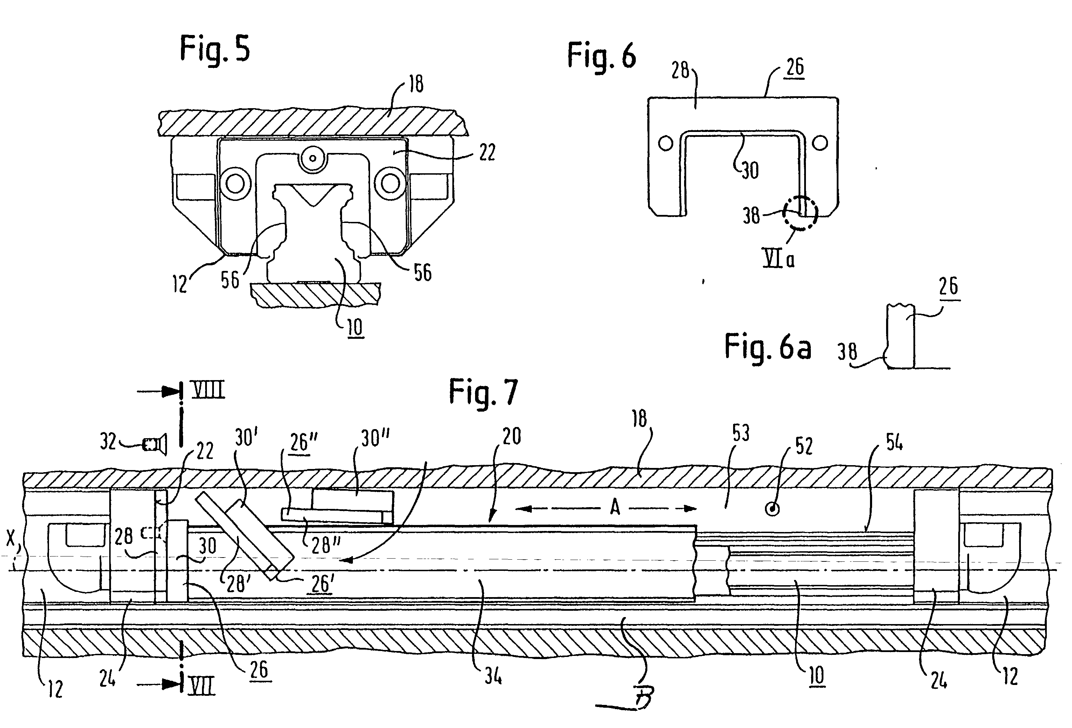

An dem linken Führungswagen 12 gemäß Fig. 4 und 7 ist eine Endfläche 22 ausgebildet. Diese Endfläche 22 ist Teil eines Kopfstücks 24, innerhalb dessen die Kugelschleifen 16 gemäß Fig. 2 ihre Richtungsumlenkung erfahren.

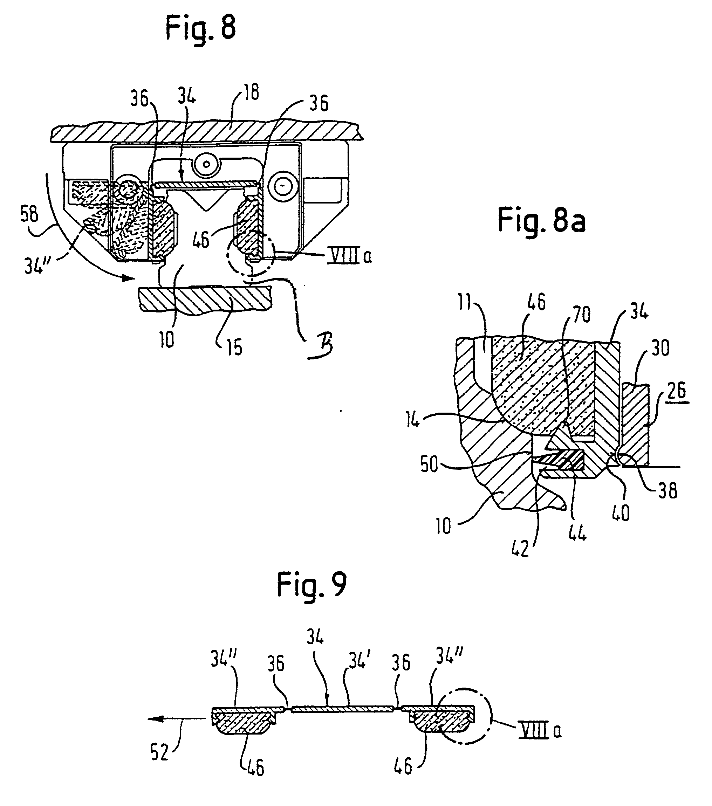

An der Endfläche 22 wird ein U-förmiges Abdeckmittelanschlußelement 26 gemäß Fig. 6 befestigt. Dieses Abdeckmittelanschlußelement 26 besteht aus einem Befestigungsflansch 28 und einem Profilfassungsteil 30. Der Befestigungsflansch 28 wird durch Befestigungsschrauben 32 an der Endfläche 22 befestigt. Das vorstehend Gesagte gilt auch für die rechte Hälfte von Fig. 7, d.h. für den anderen Führungswagen 12. Danach wird ein in Fig. 9 flachgelegt gezeichnetes Abdeckmittelprofil 34 durch rechtwinkeliges Abbiegen in Filmscharnieren 36 zu der U-Form gemäß Fig. 8 gebogen. Das auf diese Weise erhaltene U-förmige Abdeckmittelprofil 34 kann dann in das Profilfassungsteil 30 an beiden Führungswagen 12 eingesteckt werden, etwa so, daß es zunächst an dem einen Führungswagen 12 in den Profilfassungsteil 30 eingeschoben wird und daß hierauf die beiden Führungswagen einander angenähert werden. Dabei kommen Wülste 38 der Profilfassungsteile 30 in Haltenuten 40 des Abdeckmittelprofils 34 zu liegen, wie in Fig. 8a deutlich zu erkennen ist. An den beiden Schenkeln des Abdeckmittelprofils 34 sind Dichtungsaufnahmekammern 42 angebracht, welche Dichtleisten 44 aufnehmen. Diese Dichtleisten 44 kommen in dichtende Anlage an die Führungsschiene 10, wie ebenfalls in Fig. 8a deutlich zu erkennen ist.

Es ist dafür gesorgt, daß auch an den Enden des Abdeckmittelprofils 34 eine Abdichtung hergestellt ist durch entsprechende Gestaltung des Abdeckmittelanschlußelements 26 mit zugehörigen Dichtmitteln und durch entsprechende Gestaltung der Führungswagen 12.

Man erkennt aus Fig. 8, 8a und 9, daß an den Laufbahnen 14 zugekehrten Seitenbereichen des Abdeckmittelprofils 34 poröse Ölverteilerkörper 46 angebracht sind, welche zum Kontakt mit den Laufbahnen 14 kommen, wenn das Abdeckmittelprofil 34 angelegt wird. Diese Ölverteilerkörper 46 erstrecken sich über die ganze Länge des Abdeckmittelprofils 34. Sie sind mit Schmieröl getränkt. Das Tränken mit Schmieröl bildet einen Langzeitschmierölvorrat. Durch das an die Laufbahnen 14 bei Verschiebung der Führungswagen 12 abgegebene Schmieröl wird auch der Kontaktbereich zwischen den Kugelumlaufschleifen 16 und den Laufbahnen 14 geschmiert und überträgt sich über die Kugeln auch auf die Laufbahnen, welche an den Führungswagen 12 für die Kugeln der Kugelschleifen 16 ausgebildet sind. Um eine intensive Ölbenetzung im Bereich der Kugelschleifen 16 zu erhalten ist vorgesehen, daß gemäß Fig. 1 der Raum 48 am einen Ende des Führungswagens 12, der grundsätzlich - für andere Anwendungszwecke - zur Aufnahme einer an dem Schienenprofil eng anliegenden Abstreifdichtung bestimmt ist, im vorliegenden Fall nicht mit einer Dichtung besetzt ist. Am anderen Ende des Führungswagens 12 in Fig. 1 ist selbstverständlich eine Dichtung in die Ausnehmung 48 eingesetzt.

In Fig. 8 ist die Schleifzone zwischen der Dichtleiste 44 und der Führungsschiene mit 50 bezeichnet. Um Abrasion durch Reibung an dieser Stelle zu minimieren, kann der Ölverteilerkörper 46 bis in die Schleifzone 50 hinein fortgesetzt sein und zwar bis in nächste Nähe der Anlagestelle zwischen der Dichtleiste 44 und der Schleifzone 50, so daß die Reibung und die Abrasion dort minimiert ist.

In Fig. 7 ist noch eine andere Montageweise für die Schienenabdeckung 20 angedeutet. Man erkennt aus Fig. 7, daß der Objekttisch 18 bereits an dem Führungswagen 12 befestigt und damit der Abstand A zwischen den beiden Führungswagen 12 bereits festgelegt ist. Dank der Gestaltung der Abdeckmittelteile 26 und 34 kann auch in diesem Bauzustand die Abdeckung noch montiert werden. Man kann das flachgelegte Abdeckmittelprofil 34 in diesem Zustand in Pfeilrichtung 52 der Fig. 7 und 9 in den Spalt 53 zwischen dem Objekttisch 18 und der Kopffläche 54 der Führungsschiene 10 hineinstecken, so daß der Mittelbereich 34' des flachgelegten Abdeckmittelprofils 34 über die Kopffläche 54 zu liegen kommt. Dann kann man mittels eines Hilfswerkzeugs, beispielsweise einer Zwinge, die Bereiche 34'' gegen die Seitenflächen 56 der Führungsschiene 10 beiklappen, so daß das zunächst flachgelegte Abdeckmittelprofil 34 die U-Form gemäß Fig. 8 annimmt. Anschließend können die Abdeckmittelanschlußelemente 26 in der Orientierung 26'' gemäß Fig. 7 in den Spalt 53 eingeschoben werden, hierauf in die Orientierung 26' verschwenkt werden, wobei sie grätschartig auf das Abdeckmittelprofil 34 aufgebracht werden und schließlich können die Abdeckmittelanschlußelemente 26 in der Orientierung 26 gemäß Fig. 8 mit ihrem Befestigungsflansch 28 an die Endfläche 22 angelegt und dort mittels der Schrauben 32 verschraubt werden. Dieser Vorgang läßt sich an den beiden Führungswagen 12 der Fig. 7 durchführen. Dabei schnappen die Wülste 38 in die Haltenuten 40 ein, so daß das Abdeckmittelprofil 34 schließlich auch gegen Vertikalbewegung gesichert ist. In axialer Richtung X ist das Abdeckmittelprofil 34 durch Anschlag an den Abdeckmittelanschlußelementen oder dem Führungswagen 12 gesichert. Da das Abdeckmittelprofil 34 in Achsrichtung X in den Profilfassungsteilen 30 beweglich ist und durch die Überlappung der Profilfassungsteile 30 mit dem Abdeckmittelprofil 34 eine Dichtung hergestellt ist, ist eine genaue Anpassung der axialen Länge des Abdeckmittelprofils 34 an den Abstand A der Führungswagen 12 nicht notwendig.

Der Schmierölverteilerkörper 46 kann sich über die ganze Länge des Abdeckmittelprofils 34 erstrecken, so daß auch nach längerem Stillstand der Führungswagen 12 bei Neubeginn der Bewegung kurzfristig mit ausreichender Schmierung der Kugelumläufe 16 gerechnet werden kann. Da der Ölverteilerkörper 46 unter Druck der jeweiligen Laufbahn 14 anliegt, ergibt sich bei großer Länge des Ölverteilerkörpers 46 unter Umständen eine zu große Reibung für die Läuferbaugruppe, die von den Führungswagen 12 und dem Objekttisch 18 gebildet ist. Diese Reibung kann in Grenzen gehalten werden, indem der Ölverteilerkörper 46 in Abständen längs der Richtung X unterbrochen oder mit Ausnehmungen versehen wird. Es ist ohne weiteres erkennbar, daß das Abdeckmittel 20 in analoger Weise zu der vorstehend beschriebenen Montage gemäß Fig. 7 auch wieder demontiert werden kann, wenn es beispielsweise gilt, den Ölverteilerkörper 46 und/oder die Dichtleisten 44 wegen Abnutzung zu ersetzen.

Zur Fig. 8 ist noch nachzutragen, daß der Beiklappvorgang der Bereiche 34'' des Abdeckmittelprofils 34 durch den Schwenkpfeil 58 angedeutet ist sowie durch die verschiedenen Winkelstellungen des Bereichs 34''.

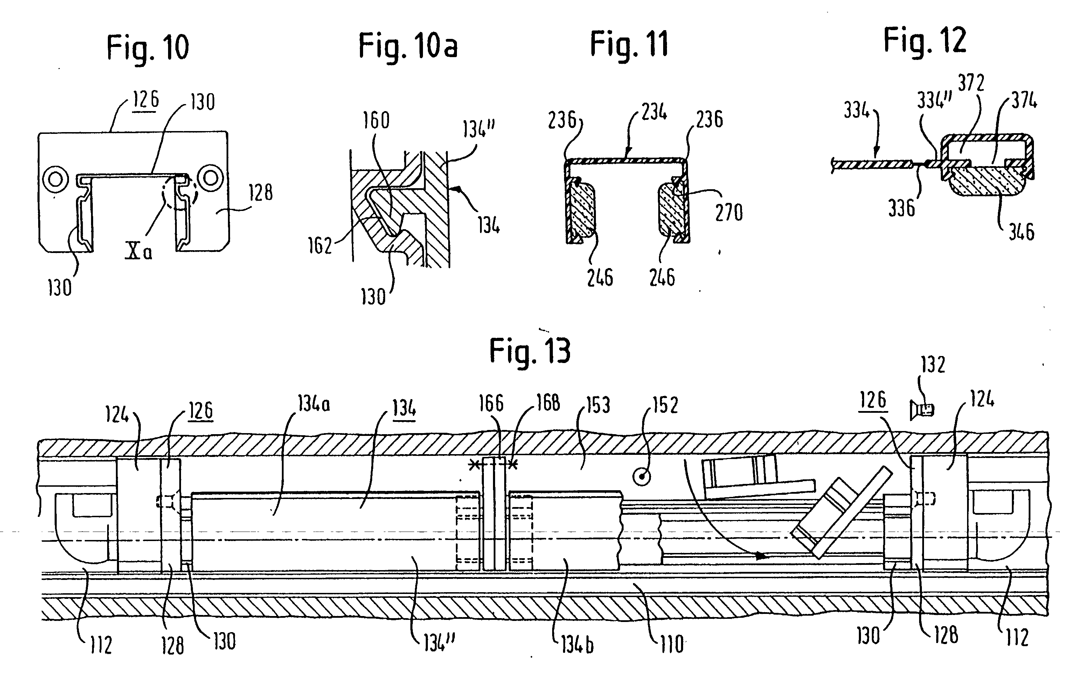

In Fig. 10 sind analoge Teile mit gleichen Bezugszeichen versehen wie in Fig. 6, jeweils vermehrt um die Zahl 100. Man erkennt dort eine andere Gestalt des Profilfassungsteils 130. Dieser Profilfassungsteil 130 ist, wie insbesondere auch aus Fig. 10a zu ersehen, so gestaltet, daß ein Abdeckmittelprofil 134 von außen an dem Profilfassungsteil 130 angelegt und mit diesem verrastet werden kann. Zu diesem Zweck ist am Bereich 134'' des Abdeckmittelprofils 134 ein Rasthaken 160 angeformt, der beim Beiklappen des Bereichs 134'' in eine Rastnut 162 des Profilfassungsteils 130 einschnappt. Die Abdeckmittelanschlußelemente 126 können dann vorab an den Führungswagen 112 durch Schrauben oderdurch Schnappverbindungsmittel befestigt werden und anschließend kann das Abdeckmittelprofil 134, wie zu Fig. 7 beschrieben, in Pfeilrichtung 152 in den Spalt 153 eingeschoben werden. Durch Beiklappen der Bereiche 134'' kann dann der in Fig. 10a dargestellte Schnappeingriff hergestellt werden. Damit ist die Montage des Abdeckmittelprofils 134 grundsätzlich beendet.

In Fig. 13 ist zusätzlich dargestellt, daß das Abdeckmittelprofil 134 aus zwei Abdeckprofilabschnitten 134a und 134b besteht, die durch einen Stabilisierungsbogen 166 miteinander verbunden sind. Der Stabilisierungsbogen 166 kann aus zwei mit ihren Befestigungsflanschen 128 Rücken an Rücken liegenden Abdeckmittelanschlußelementen 126 gemäß Fig. 10 zusammengesetzt sein. Durch den Stabilisierungsbogen 166 sind dann einerseits die beiden Abdeckprofilabschnitte 134a und 134b - sofern nötig - dicht miteinander verbunden. Andererseits sind damit auch die Bereiche 134'' des Abdeckmittelprofils 134 gegen Abheben von der Schiene stabilisiert. Dies ist insbesondere wichtig, wenn eine öldichte Anlage der Bereiche 134'' an der Führungsschiene 110 sichergestellt werden soll. Die den Stabilisierungsbogen 166 bildenden Abdeckmittelanschlußelemente 126 können durch Verschraubung 168 miteinander verbunden werden.

Da, wie schon erwähnt, an den beiden voneinander abgelegenen Enden der Führungswagen 12 bzw. 112 Dichtungselemente vorgesehen sein können, welche auf dem ganzen Profilumfang der Führungsschienen 10 bzw. 110 schleifen, kann man auch die Schmierung der Führungsschiene etwa durch entsprechend umgestaltete Ölverteilerkörper so gestalten, daß überall wo Reibung zwischen den Enddichtungen der Führungswagen 112 und der Führungsschiene 110 auftritt, eine ausreichende Schmierung gewährleistet ist, so daß auch dort durch die in den Räumen 48 der voneinander abgelegenen Führungswagenenden eingelegten Dichtungen kein Verschleiß eintritt.

Die Demontage des Abdeckmittelprofils 134 in Fig. 13 kann analog zu der vorstehend beschriebenen Montage durch entsprechende Umkehrung der Vorgehensweise bewirkt werden.

Um eine weitere Stabilisierung der Abdeckmittelprofile 34 bzw. 134 sicherzustellen, können - insbesondere bei großer Abstandslänge A - an beliebigen Stellen zwischen den Führungswagen 12 bzw. 112 Stabilisierungsmittel für das Abdeckmittelprofil 34 bzw. 134 angesetzt werden. Diese Stabilisierungsmittel können beispielsweise von federnden U-Klammern gebildet sein, welche ähnlich eingebaut werden können wie die Abdeckmittelanschlußelemente, etwa entsprechend der Orientierungsfolge 26'', 26', 26 in Fig. 7, und welche insbesondere dafür sorgen, daß die Schmierung durch die Ölverteilerkörper 46 gewährleistet ist und ferner die Abdichtung durch die Dichtleisten 44 gewährleistet ist.

In Fig. 11 ist gezeigt, daß auf die Filmscharniere auch verzichtet werden kann, wenn das Abdeckmittelprofil 234 aus einem hinreichend biegsamen Material hergestellt ist, so daß Abknickungen in den Ecken 236 möglich sind. Die Halterung der Ölverteilerkörper 46 bzw. 246 kann gemäß Fig. 8a und 11 durch Spitzprofile 70 bzw. 270 erfolgen, welche beispielsweise aus Filz oder einem offenzelligen Polymerschaum bestehen.

In Fig. 12 ist eine weitere geänderte Ausführungsform eines Abdeckmittelprofils 334 dargestellt. Analoge Teile sind wieder mit gleichen Bezugszeichen versehen wie in den vorangehenden Ausführungsformen, jeweils vermehrt um die Zahl 300. Man erkennt, daß in den Bereichen 334'' durch Ausgestaltung des jeweiligen Profils Kammern 372 zur Aufnahme von ungebundenem Schmieröl ausgebildet sind. Diese Kammern sind durch Schlitze 374 in Nachsättigungsverbindung mit den Ölverteilerkörpern 346.

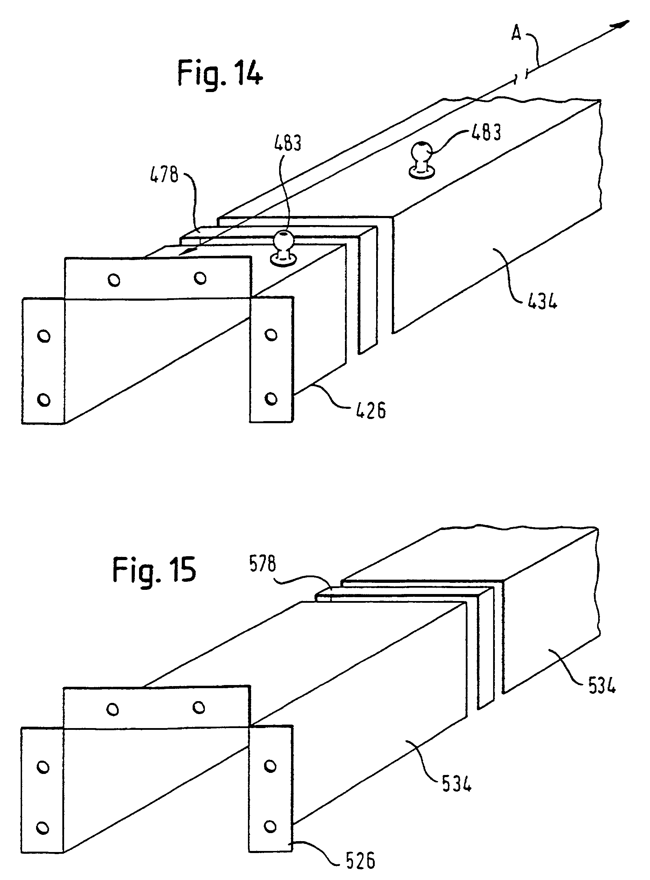

In Fig. 14 ist schematisch angedeutet, daß zwischen einem Abdeckmittelanschlußelement 426 und einem Abdeckmittelprofil 434 beliebige Kupplungsmittel 478 eingeschaltet sein können, die nach Wunsch auch der Stabilisierung dienen können. Dabei wird in Fig. 14 davon ausgegangen, daß das Abdeckmittelanschlußelement 426 wieder verhältnismäßig kurz ist und die Hauptlänge des Abstands A von dem Abdeckmittelprofil 434 überbrückt wird. Das Abdeckmittelprofil 434 kann im Extrusions- oder Intrusionsverfahren aus Kunststoff gespritzt werden. Für das Herstellen der Abdeckmittelanschlußelemente 426 eignet sich jedes Kunststoffspritz- oder -gußverfahren. Natürlich können die Teile 426 und 434 auch aus Metallblech geformt werden.

Fig. 15 zeigt, daß Abdeckmittelprofile 534 auch einstückig mit Abdeckmittelanschlußelementen 526 zusammenhängen können. In diesem Fall ist eine Herstellung im Extrusionsverfahren als Meterware oder Stangenware nicht möglich. Die Abdeckmittelprofile 534 können aber mit einer solchen Länge gespritzt werden, daß durch Zusammensetzen zweier Abdeckprofilabschnitte 534 jede vorkommende Länge zwischen zwei Führungswagen überbrückt werden kann, wobei die Verbindung wieder durch beliebige Kupplungsmittel 578 hergestellt sein kann, die gleichzeitig stabilisierend und/oder dichtend wirken können.

In allen bisher beschriebenen Ausführungsformen war angenommen worden, daß - wie in Fig. 7 dargestellt - das Abdeckmittel 20 im wesentlichen innerhalb des Umrisses der Führungswagen 12 liegen. Dies ist eine bevorzugte Ausführungsform. Es soll aber auch nicht ausgeschlossen werden, daß - wie in Fig. 1 mit gestrichelten Linien dargestellt - ein Abdeckmittelprofil 634 um die Führungswagen gelegt werden kann. Dieses Abdeckmittelprofil 634 kann dann in den zur Achse X parallelen Umfangsflächen 680 des jeweiligen Führungswagens anliegen und wiederum mit der Führungsschiene 10 durch Dichtflansche 682 in dichtendem Kontakt stehen. Auf diese Weise ist es sogar möglich, bei drei und mehr Führungswagen 1 2 auf einer Führungsschiene 10 die jeweils freiliegenden Schienenabschnitte zwischen aufeinander folgenden Führungswagen abzudecken.

Zur terminologischen Ergänzung sei noch darauf hingewiesen, daß in Fig. 8a das Abdeckmittelprofil 34 mit der Führungsschiene 10 einen Profilhohlraum 11 bildet.

Bei Verwendung einer Ausführungsform eines Abdeckmittelprofils 334 gemäß Fig. 12 müssen natürlich an den Enden der Kammer 372 Abdeckkappen vorgesehen sein, um ein Auslaufen von Schmieröl zu verhindern.

Sind Stabilisierungselemente zum Schutz eines Abdeckmittelprofils gegen Ausbeuten vorhanden, so können diese zur axialen Sicherung mit Spitzen versehen sein, die sich in das jeweilige Abdeckmittelprofil eingraben.

Der in der Beschreibung mehrfach verwendete Begriff "Extrusion" kann auch durch den Ausdruck "Strangguß" wiedergegeben werden.

An dem Abdeckmittelanschlußelement 426 und/oder dem Abdeckmittelprofil 434 kann auch ein Schmiernippel 483 zum regelmäßigen Nachfüllen von Schmieröl oder Schmierfett angebracht sein, wie in Fig. 14 dargestellt.

Die Charakterisierung des Abdeckmittels als "starr" ist natürlich unter Berücksichtigung des jeweiligen Materials und Einsatzzwecks zu verstehen. Es soll durch den Begriff "starr" vor allem eine Abgrenzung über lange Strecken gegenüber balgenförmige Abdeckmittel zum Ausdruck gebracht werden. Insofern kann "starr" auch im Sinne von "im wesentlichen faltenlos" verstanden werden. Eine Übertragbarkeit von Druckkräften durch das Abdeckmittelprofil ist in der Regel nicht beabsichtigt.

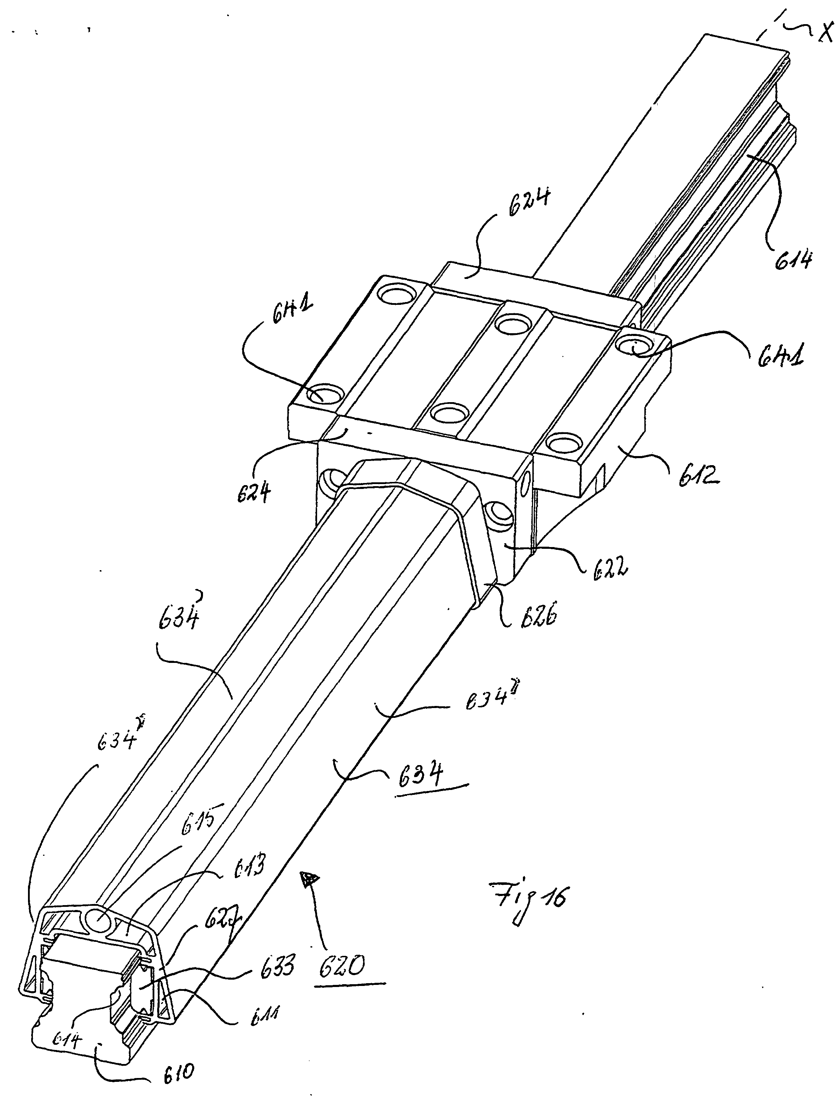

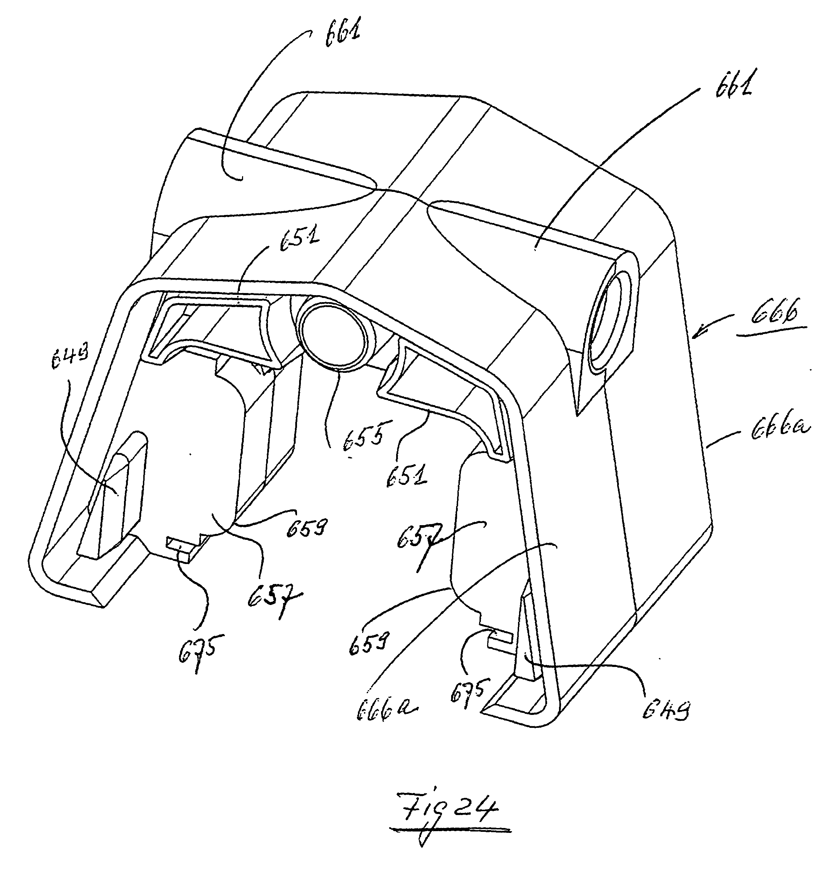

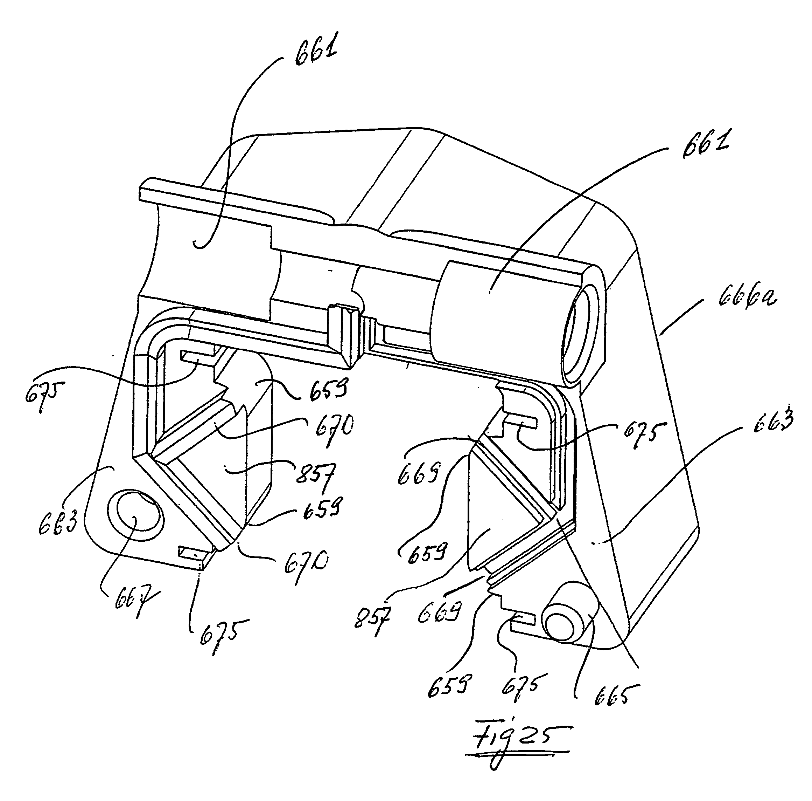

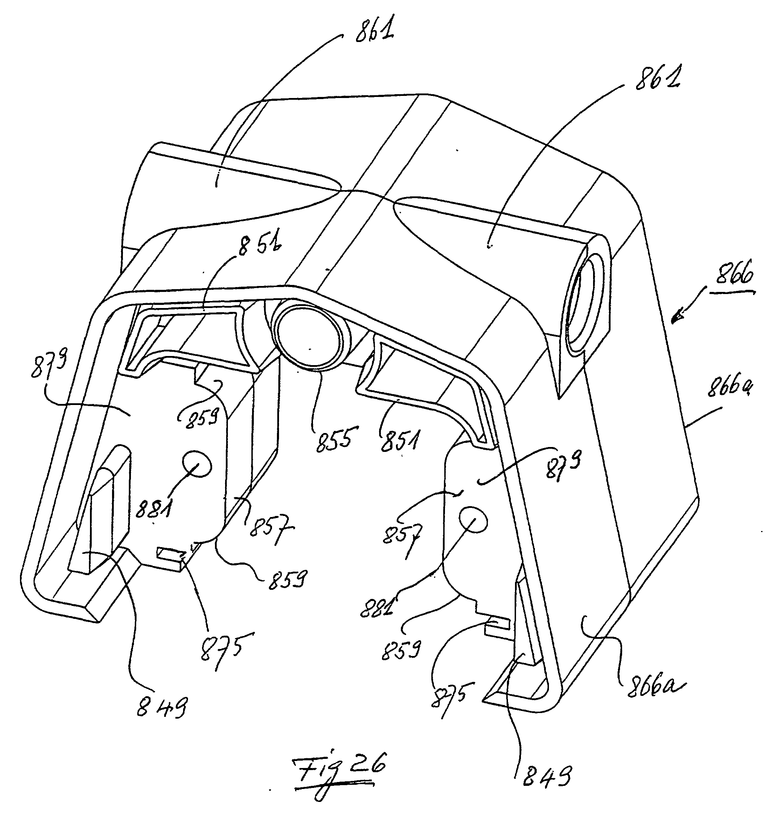

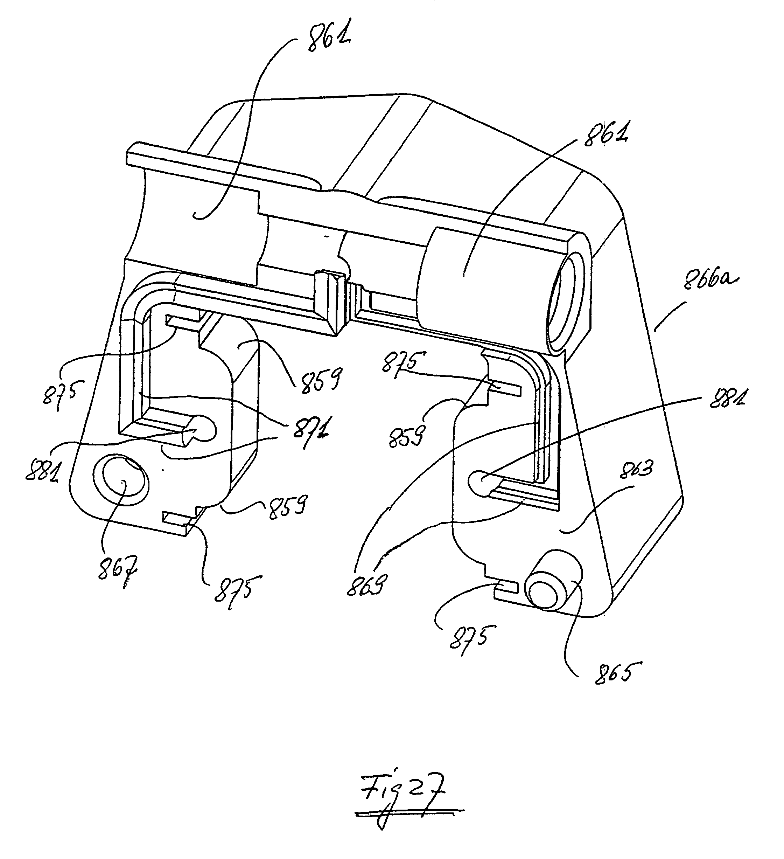

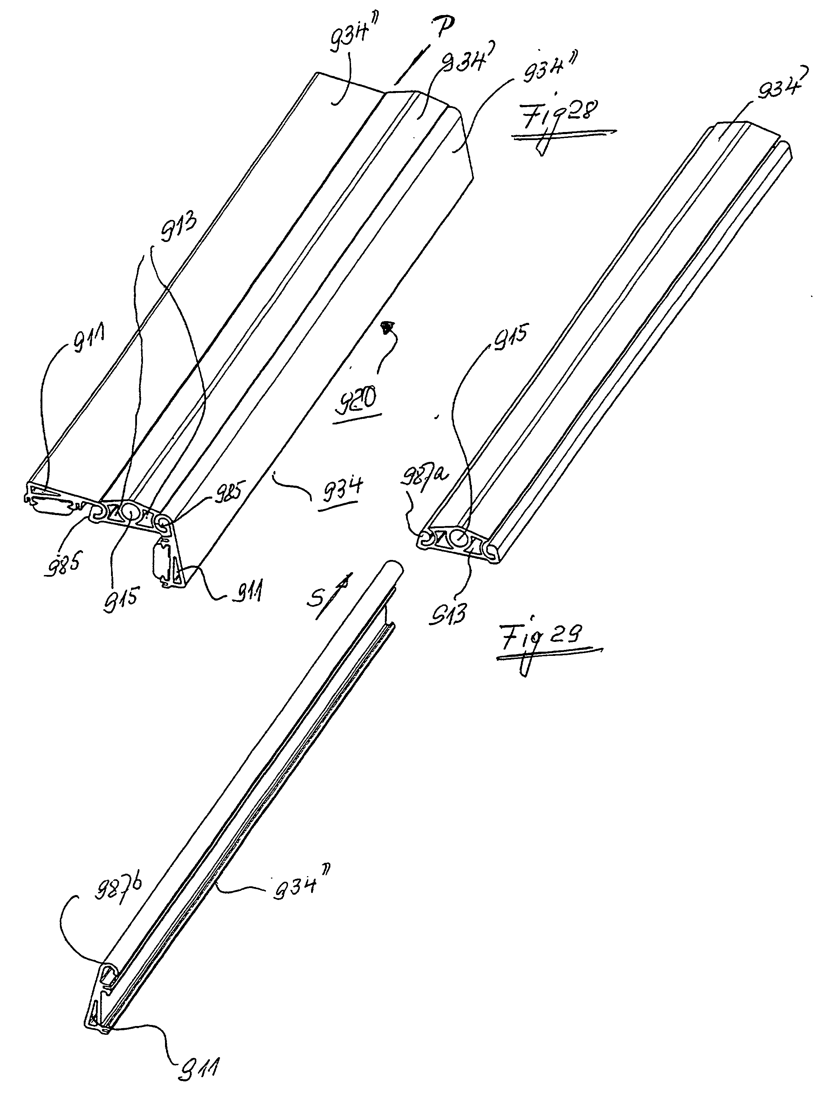

In den Figuren 16, 17, 18, 19, 20, 21, 22, 24, 25 sind analoge Teile mit den gleichen Bezugszeichen bezeichnet wie in den Figuren 1 bis 9 jeweils vermehrt um die Zahl 600.

Man erkennt in Fig. 16, daß das Abdeckmittel 620 von einem Abdeckmittelprofil 634 und Abdeckprofilendstücken 626 gebildet ist, welche an den Kopfstücken 624 der Führungswagen 612 anliegen. Man erkennt weiter aus Fig. 16, daß das Abdeckmittelprofil 634 als ein Hohlwandprofil ausgebildet ist mit einem Mittelbereich 634' und zwei Seitenbereichen 634''. Das Hohlwandprofil besteht aus Aluminium und ist durch Strangpressen erzeugt. In dem Hohlwandprofil 634 sind als Folge der Herstellung Hohlkammern 611, 613 und ein Schmiermittelkanal 615 ausgebildet. Das Abdeckmittelprofil 634, auch Hohlwandprofil genannt, ist in das Abdeckprofilendstück 626 eingesteckt, weiches seinerseits an dem Kopfstück 624 des Führungswagens 612 anliegt.

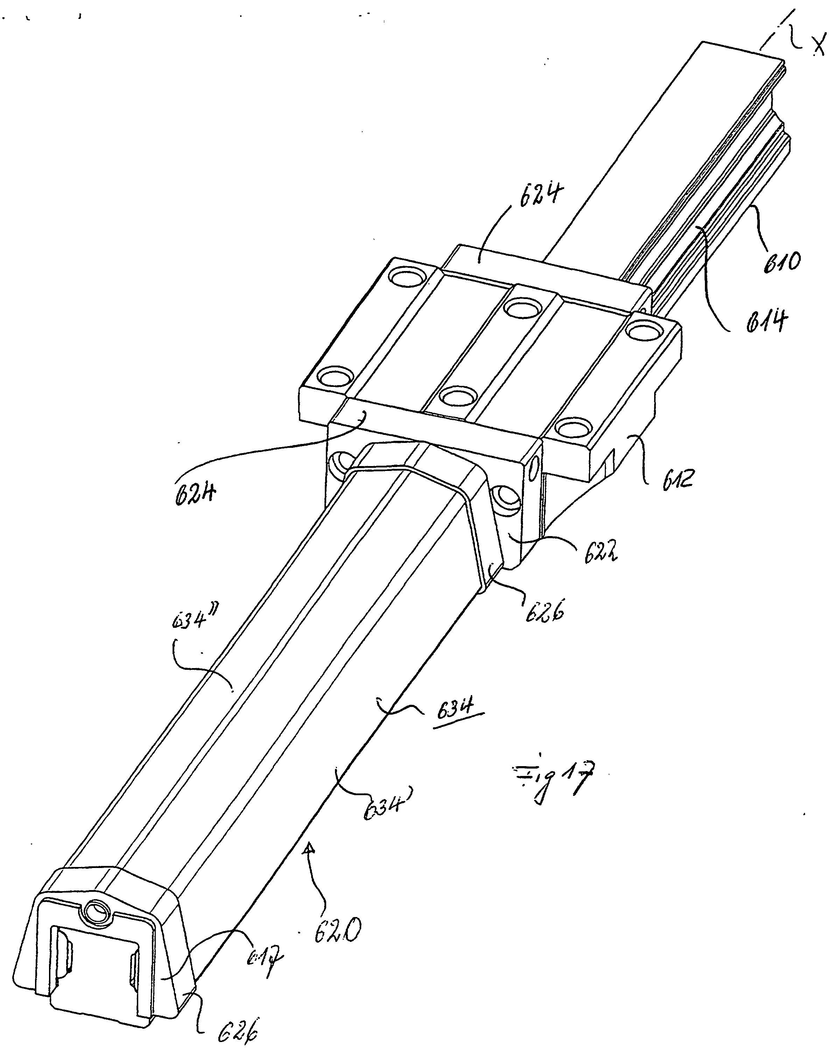

Wie aus Fig. 17 zu ersehen, greift das Abdeckmittelprofil 634 mit seinen beiden Enden in je ein Abdeckprofilendstück 626 ein, das an je einem Führungswagen 612 anliegt. In Fig. 17 ist der untere Führungswagen nicht gezeichnet. Die beiden Führungswagen 612 sind mit einer Tischplatte verbunden, wie sie in Fig. 4 dargestellt und dort mit 18 bezeichnet ist. Durch die Verbindung der beiden Führungswagen 612 einer gemeinsamen Führungsschiene 610 mit der Tischplatte 18 ist der Abstand der beiden Führungswagen 612 in der Längsrichtung X festgelegt. Das Abdeckmittel 620 bestehend aus dem Abdeckmittelprofil 634 und den beiden Abdeckprofilendstücken 626 hat eine Gesamtlänge entsprechend dem Abstand zweier aufeinander folgender Führungswagen 612.

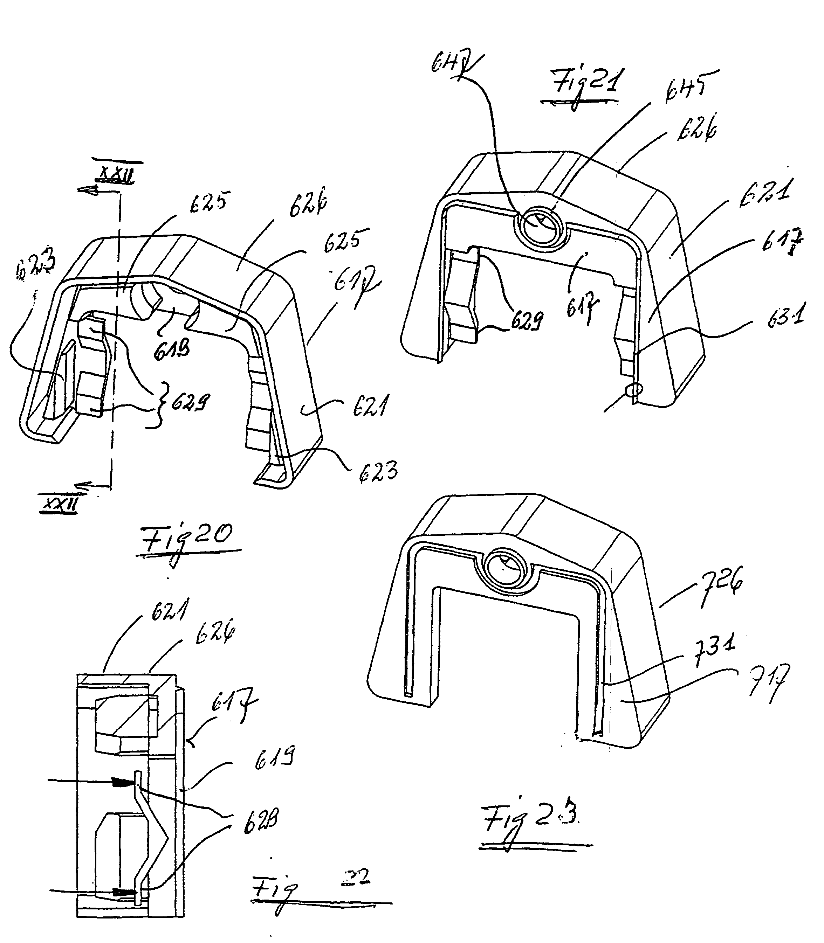

In den Figuren 20, 21 und 22 erkennt man die Ausbildung eines Abdeckprofilendstücks 626 im einzelnen. Das Abdeckprofilendstück 626 weist eine Anlagefläche 617 zur Anlage an der Endfläche 622 des Kopfstücks 624 gemäß Fig. 16 und 17 auf. Die Anlagefläche 61 7 ist von einer Grundplatte 619 gebildet. Mit der Grundplatte 619 ist einstückig ein Mantelteil 621 hergestellt, welcher beim Zusammenstecken des Abdeckprofilendstücks 626 mit dem Abdeckmittelprofil 634 gemäß Figuren 16 und 17 sich an der Außenumfangsfläche des Abdeckmittelprofils 634 anlegt. An der Grundplatte 619 sind keilförmige Vorsprünge 623 angebracht, die beim Zusammenstecken des Abdeckprofilendstücks 626 und des Abdeckmittelprofils 634 in die Hohlkammern 611 eintreten. Ferner sind an der Grundplatte 619 Vorsprünge 625 angebracht, welche beim Zusammenstecken der Abdeckprofilendstücke 626 und der Abdeckmittelprofile 634 in die Hohlkammern 613 eindringen. Die Wände des Schmiermittelkanals 615 kommen beim Zusammenstecken des Abdeckmittelprofils 634 und eines Abdeckprofilendstücks 626 zwischen die zwei Vorsprünge 625 zu liegen und stoßen gegen die Grundplatte 619 an. Die zur Achse X orthogonalen Endflächen 627 des Abdeckmittelprofils 634 stoßen beim Zusammenstecken des Abdeckmittelprofils 634 und des Abdeckprofilendstücks 626 gegen Blattfederelemente 629, welche einstückig mit dem Abdeckprofilendstück 626 hergestellt sind. An der Anlagefläche 617 des Abdeckprofilendstücks 626 ist eine Dichtleiste 631 angespritzt oder angeklebt, welche sich dichtend gegen die Endfläche 622 des Kopfstücks 624 anlegt, wenn das Abdeckmittel 620 zwischen zwei aufeinander folgende Führungswagen 612 eingebaut wird. Dank der Blattfedern 629 läßt sich das aus dem Abdeckmittelprofil 634 und den Abdeckprofilendstücken 626 bestehende Abdeckmittel 620 in axialer Richtung gegen Federkraft komprimieren, so daß sich die Länge des Abdeckmittels 620 innerhalb der normalen Toleranz entsprechenden Grenzen jeweils an den Abstand zwischen zwei aufeinander folgenden Führungswagen anpassen läßt.

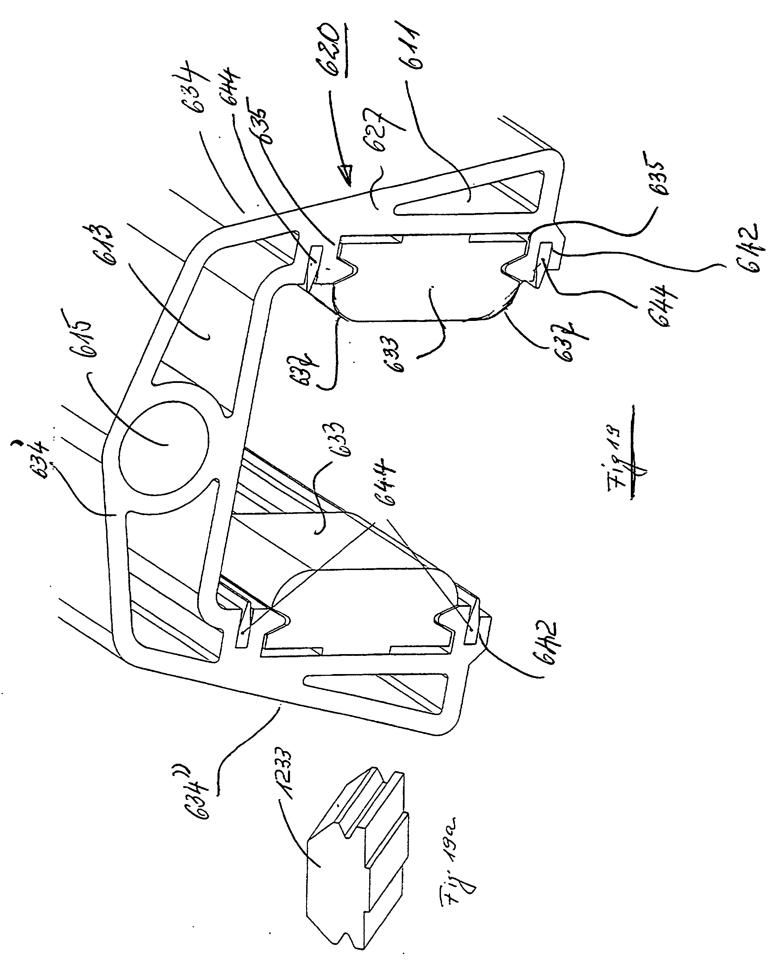

An der Innenseite des Abdeckmittels 620 ist, wie insbesondere aus Fig. 19 zu ersehen, ein Gleitschuh 633 durch ein Gleitschuhhalteprofil 635 festgehalten. Der Gleitschuh 633 ist so geformt, daß er mit seinen Rundungen 637 an den Laufbahnen 614 der Führungsschiene 610 gleitfähig anliegt. Die Führungsbahnen 614 sind zur Anlage der Kugeln 16 gemäß Fig. 2 ausgebildet. Demzufolge ist das Abdeckmittel 620 bestehend aus dem Abdeckprofil 634 und den Abdeckprofilendstücken 626 unabhängig von den beiden Führungswagen 612 an der Führungsschiene 610 geführt. Weiterhin genügt es zum Transport des Abdeckmittels 620 mit den Führungswagen 612, das Abdeckmittel 620 einfach zwischen den Endflächen 622 der beiden Führungswagen 612 einzuspannen. Dies kann z. B. in der Weise geschehen, daß man nacheinander einen ersten Führungswagen 612, dann das Abdeckmittelprofil 634 mit seinen beiden Abdeckprofilendstücken 626 und dann einen zweiten Führungswagen 612 auf die Führungsschiene 610 aufschiebt, hierauf den ersten Führungswagen 612 an der Tischplatte 618 gemäß Fig. 4 durch Schrauben befestigt, hierauf den zweiten Führungswagen gegen den ersten Führungswagen so weit annähert, daß die Schraubenlöcher 641 des zweiten Führungswagens in Deckung mit entsprechenden Löchern des Tisches 18 gelangen unter axialer Kompression des aus dem Adeckmittelprofil 634 und den Abdeckprofilendstücken 626 bestehenden Abdeckmittels 620 und daß man schließlich den zweiten Führungswagen 612 ebenfalls mit der Tischplatte 18 verschraubt.

Die Dichtleiste 631 liegt dann in einer Querebene orthogonal zur Längsachse X verschiebbar an der Endfläche 622 des Kopfstücks 624 an und kann sich gegenüber der Endfläche 622 selbst in die richtige Lage einstellen, die durch die Position des Führungswagens 612 und die Führung des Abdeckmittelprofils 634 mittels der Gleitschuhe 633 an der Führungsschiene 610 bestimmt ist. An der Anlagefläche 617 ist zur Abdichtung eines Schmiermitteldurchlasses 647 der Grundplatte 619 gegenüber der Endfläche 622 des Kopfstücks 624 ein Dichtbund 645 angeformt, der sich dichtend gegen die Endfläche 622 anlegt, und zwar im Umgebungsbereich einer Schmiermittelanschlußbohrung der Endfläche 622 des Kopfstücks 624. Es ist aber auch denkbar, daß der Dichtbund 645 in die Schmiermittelanschlußbohrung des Kopfstücks 624 eintaucht, wenn dieser Dichtbund 645 elastisch deformierbar ist.

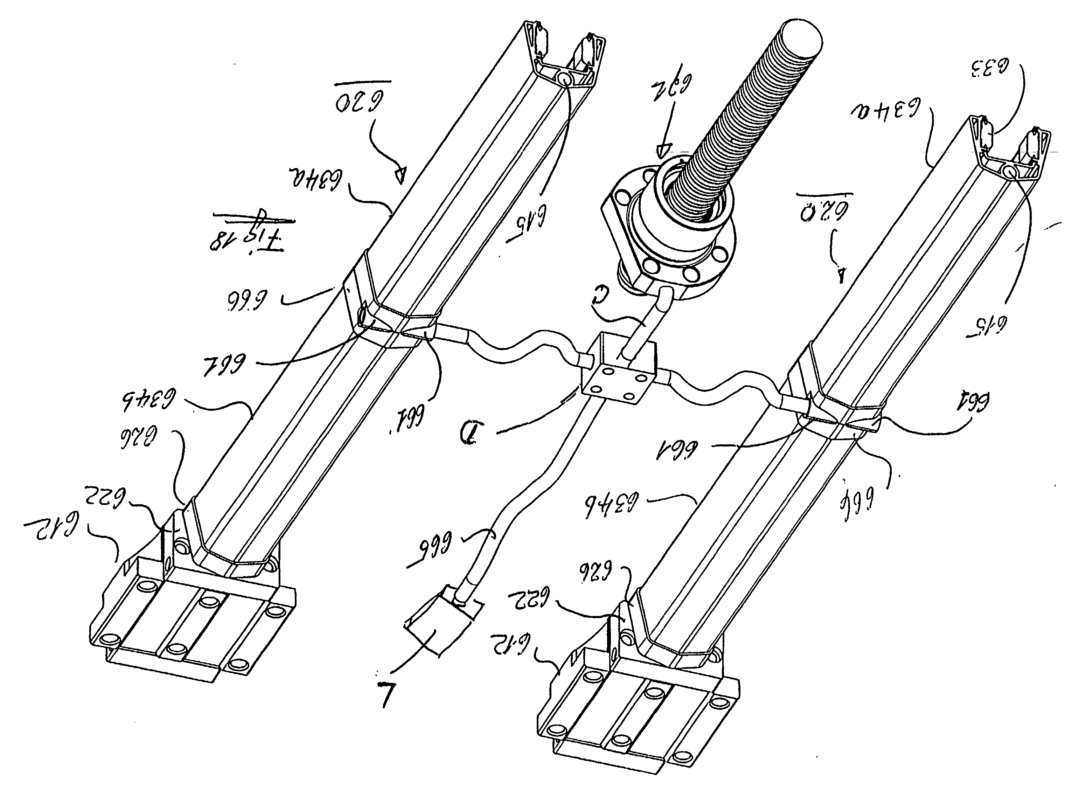

In Fig. 18 ist dargestellt, daß auf zwei parallel zueinander verlaufenden Führungsschienen (die Führungsschienen sind selbst nicht dargestellt) je ein Paar von zwei Führungswagen 612 geführt sind, also insgesamt 4 Führungswagen 612, die alle mit einer gemeinsamen Tischplatte entsprechend der Tischplatte 18 von Fig. 4 verschraubt werden. In diesem Fall sind die Abdeckmittel 620 beider Führungsschienen aus je zwei Abdeckprofilabschnitten 634a und 634b, zwei Abdeckprofilendstücken 626 und einem Kupplungsstück 666 zusammengesetzt. Der Aufbau eines Kupplungsstücks 666 ist in Fig. 24 dargestellt. Das Kupplungsstück 666 ist aus zwei Kupplungsstückhälften 666a zusammengesetzt. Die beiden Kupplungsstückhälften sind formgleich. Jede Kupplungsstückhälfte 666a ist mit Vorsprüngen 649 bzw. 651 zum Eingriff in die Hohlkammern 611 bzw. 613 des jeweiligen Abdeckmittelprofils 634a bzw. 634b ausgeführt. Ferner ist an jeder der Kupplungsstückhälften 666a ein Rohrstutzen 655 zum Eingriff in den Schmiermittelkanal 615 gemäß Figuren 16 und 19 vorgesehen.

Ferner sind in Fig. 24 an dem Kupplungsstück 666 Gleitschuhe 657 angeformt, z. B. durch Anspritzen und Angießen. Diese Gleitschuhe 657 liegen mit ihren Rundungen 659 an den Laufbahnen 614 (Fig. 16) der Führungsschiene 610 an, so daß die Abdeckung 620 auch im Bereich des Kupplungsstücks 666 an der Führungsschiene 614 geführt ist. Es versteht sich, daß die Gleitschuhe 657 an dem Kupplungsstück 666 verzichtbar sind, wenn man sich entschließt, ein Gleitstück 633 gemäß Fig. 16 und 19 auch in der Nähe des Kupplungsstücks 666 innerhalb der jeweiligen Abdeckprofilabschnitte 634a oder/und 634b vorzusehen.

Gemäß den Figuren 18 und 24 sind an den Kupplungsstücken 666 jeweils zwei wahlweise benutzbare Schmiermittelversorgungsanschlüsse 661 vorgesehen, die über einen Schmiermittelverteilerblock D gemäß Fig. 18 und eine Leitung 665 mit einer als Blackbox dargestellten stationären Schmiermittelversorgungsanlage L verbunden sind. Es versteht sich, daß der jeweils nicht angeschlossene Schmiermittelversorgungsanschluß 661 durch ein Verschlußelement oder ein Rückschlagventil abgedichtet sein kann. Von dem Schmiermittelverteilerblock D führt eine weitere Leitung C zu einem Linearantrieb 671, der von einer Spindel und einer Kugelgewindemutter gebildet ist.

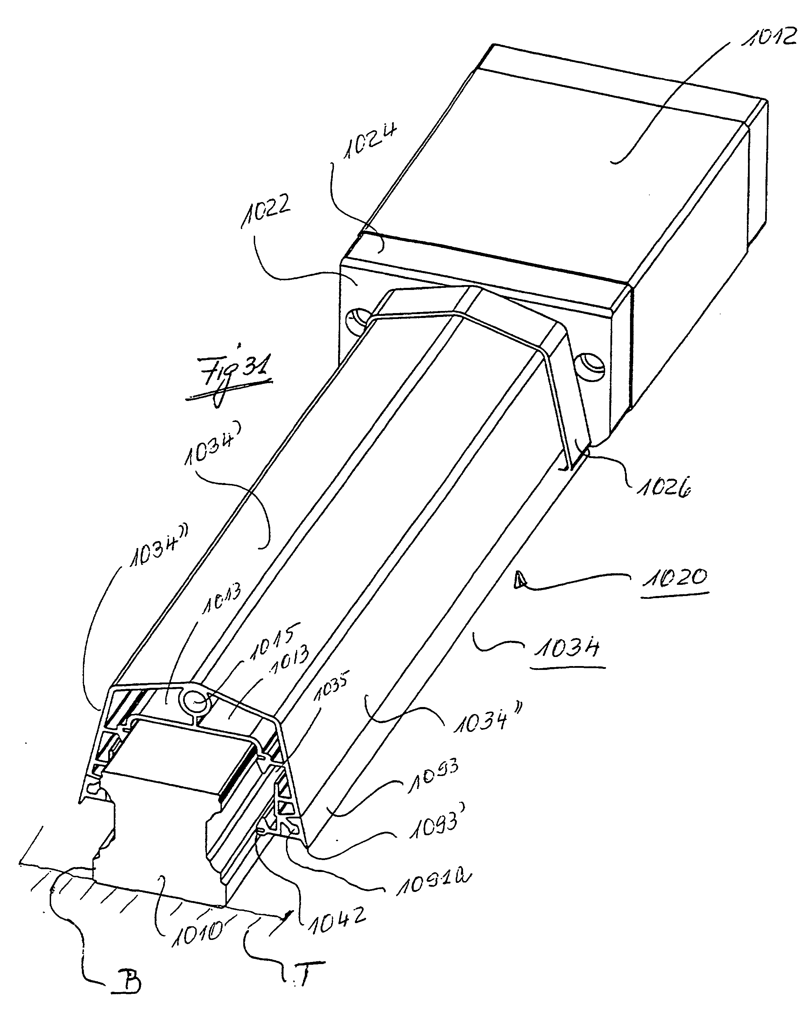

In Fig. 25 erkennt man erneut die Schmiermittelversorgungsanschlüsse 661 an der einen Kupplungsstückhälfte 666a. Zwei Kupplungsstückhälften 666a, so wie in Fig. 25 dargestellt, lassen sich zu einem Kupplungsstück 666 zusammensetzen, wobei jeweilige Verbindungsflächen 663 aneinander zur Anlage kommen und die Verbindung durch eine Kombination eines Steckbolzens 665 und eines Stecklochs 667 oder durch Verkleben oder durch Verschweißen zustande kommt. In den Verbindungsflächen 663 sind zueinander komplementäre Kanalbildungsformationen 669 und 670 ausgebildet, die nach Zusammenfügen zweier Kupplungsstückhälften 666a Verbindungskanäle 669-670 von den Schmiermittelversorgungsanschlüssen 661 zu den Rundungen 659 bilden und somit zu den Laufbahnen 614 der Führungsschiene 610 hin ausmünden. Das aus diesen Verbindungskanälen 669-670 austretende Schmiermittel gelangt damit auf die Laufbahnen 614, auf denen die Kugeln 16 gemäß Fig. 2 rollen und gleichzeitig die Gleitschuhe 633 gemäß Fig. 16 und die Gleitschuhe 657 gemäß Fig. 24 gleiten.

Aus Fig. 19 erkennt man, daß an den Abdeckmittelprofilen 634 Dichtleisten 644 angeordnet sind, welche von Dichtungsaufnahmekammern 642 des jeweiligen Abdeckmittelprofils 634 gehalten werden und oberhalb und unterhalb der beiden Laufbahnen 614 auf der einen Seite einer Führungsschiene 610 an der Führungsschiene dichtend anliegen. Die Dichtleisten 644 sind, wie aus Figuren 24 und 25 zu erkennen, im Bereich der Kupplungsstücke 666 fortgesetzt, wozu in den Kupplungsstücken 666 ebenfalls Dichtungsaufnahmekammern 675 angebracht sind.

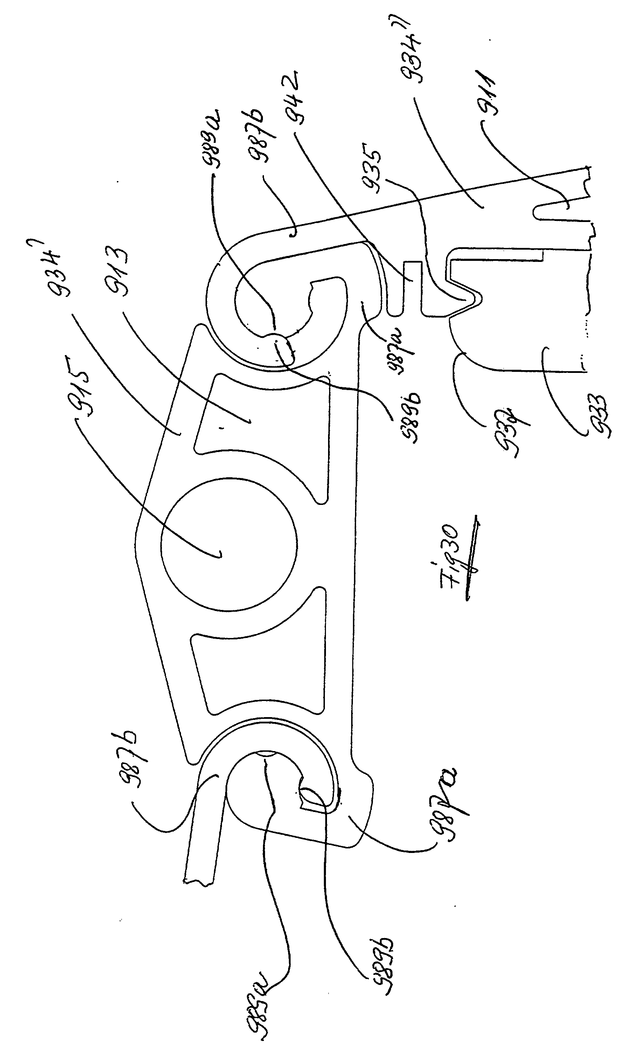

In Fig. 23 ist eine Alternative für ein Abdeckprofilendstück 726 dargestellt. Zur Abdichtung des Abdeckprofilendstücks 726 gegenüber einer Endfläche 622 gemäß Fig. 16 ist in die Anlagefläche 717 eine Nut 731 eingelassen, in welche eine Dichtschnur eingelegt werden kann.

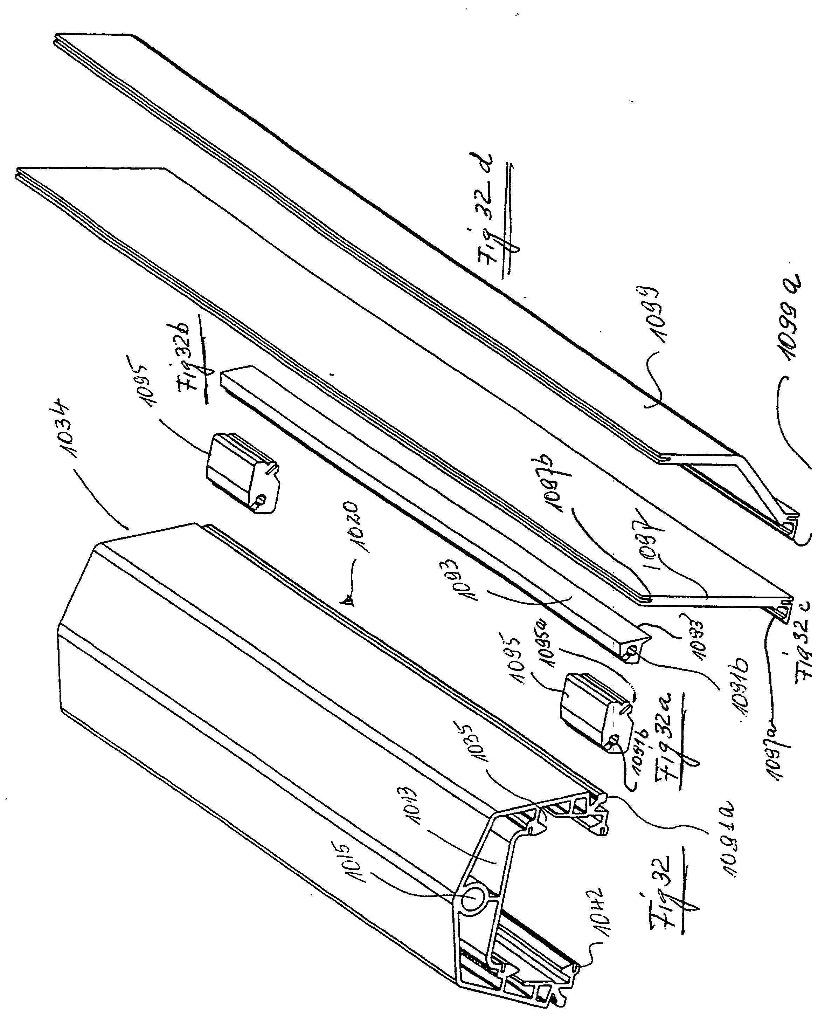

In Figuren 26 und 27 ist ein weiteres Kupplungsstück 866, wiederum zusammengesetzt aus zwei identischen Kupplungsstückhälften 866a, dargestellt. Analoge Teile sind mit den gleichen Bezugszeichen versehen wie in den Figuren 24 und 25 jeweils mit einer Erstziffer 8 statt 6.

Auch bei der Ausführungsform nach Fig. 26 und 27 sind in den Verbindungsflächen 863 Kanalbildungsformationen 869, 871 zur Bildung von Verbindungskanälen 869-871 gebildet, welche in Schmierölausflußbohrungen 881 übergehen; letztere enden in Stirnflächen 879 der Gleitschuhe 857. Man kann sich nun ohne weiteres vorstellen, daß das Kupplungsstück 866 gemäß Fig. 26 mit wiederum zwei Abdeckmittelprofilen entsprechend den Positionen 634a, 634b in Fig. 18 zusammengesetzt wird und daß in jedem dieser Abdeckmittelprofile jeweils ein Schmiermittelverteilerkörper eingesetzt ist mit einer Form entsprechend dem Gleitschuh 633 gemäß Fig. 19. Dieser Schmiermittelverteilerkörper besteht aber nunmehr aus einem Material, das nicht primär zur Führung des Abdeckmittelprofils auf der Führungsschiene bestimmt ist, sondern zur Speicherung und Abgabe von Schmiermittel an die Laufbahnen. Beispielsweise kann der Schmiermittelverteilerkörper ein poröser Schaumgummi oder Schaumkunststoff sein, der mit Schmieröl getränkt ist. Dieser Schmiermittelverteilerkörper liegt dann mit einem Ende an der Stirnfläche 879 des in dem Kupplungsstück 866 integrierten Gleitschuhs 857 an, und zwar in Überdeckung mit der Schmiermittelausflußbohrung 881, so daß das durch die Schmiermittelausflußbohrung 881 kommende Schmieröl unmittelbar in den Schmiermittelverteilerkörper eintritt, sich in diesem verteilt und an die Laufbahnen 614 gemäß Fig. 16 abgegeben wird. Der Zusammenbau der Kupplungsstückhälften 866a gemäß Fig. 27 zu dem Kupplungsstück 866 gemäß Fig. 26 erfolgt analog zu dem Zusammenbau des Kupplungsstücks gemäß Figuren 24 und 25.

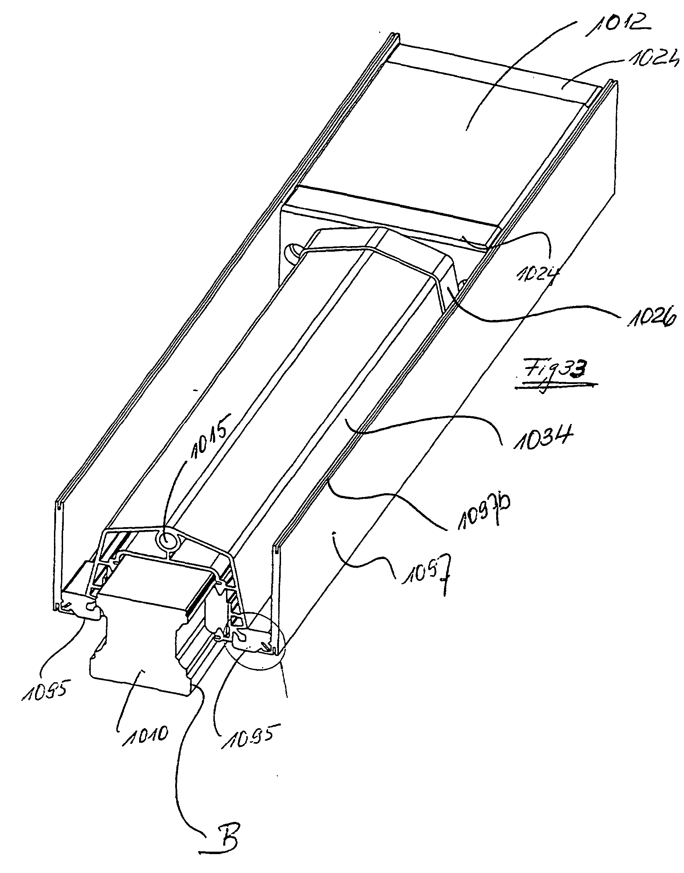

Gemäß Figuren 28 bis 30 ist ein Abdeckmittel 920 wiederum als Abdeckmittelprofil 934 ausgebildet mit einer ähnlichen Hohlprofilform der Profilwände 934' und 934'', wie in Fig. 19 dargestellt. Das Abdeckmittelprofil 934 besteht hier aus einem Mittelteil 934' und zwei Seitenteilen 934'', die durch scharnierartige Gelenke 985 miteinander gelenkig verbunden sind, und zwar so, daß sie um Schwenkachsen P gemäß Fig. 28 gegeneinander geschwenkt werden können. Die scharnierartigen Gelenke 985 sind durch komplementäre Hakenformationen 987a an den Profilmittelteil 934' und 987b an den Profilseitenteilen 934'' gebildet und können, wie in Fig. 29 durch den Pfeil S dargestellt, durch axiales Ineinanderschieben zum Eingriff gebracht werden. Weitere Einzelheiten sind in Fig. 30 zu erkennen, wo analoge Teile mit den gleichen Bezugszeichen versehen sind wie in den zuvor beschriebenen Ausführungsformen, jedoch jeweils mit einer Erstziffer 9. Man erkennt Hakenformationen 987a und 987b aus Figuren 28 und 29 wieder, die bereits ineinander gehakt sind. Man erkennt ferner an der Hakenformation 987b eine Rastnase 989b zum Eingriff mit einer Rastmulde 989a an der Hakenformation 987a. Mit Hilfe dieser Kombination einer Rastnase 989b und einer Rastmulde 989a lassen sich die beiden Profilwandteile 934' und 934'' nach Ineinanderschieben oder Ineinanderhaken bei anschließendem Verschwenken in derjenigen Stellung relativ zueinander fixieren, die in Fig. 30, und zwar dort in der rechten Hälfte dargestellt ist.

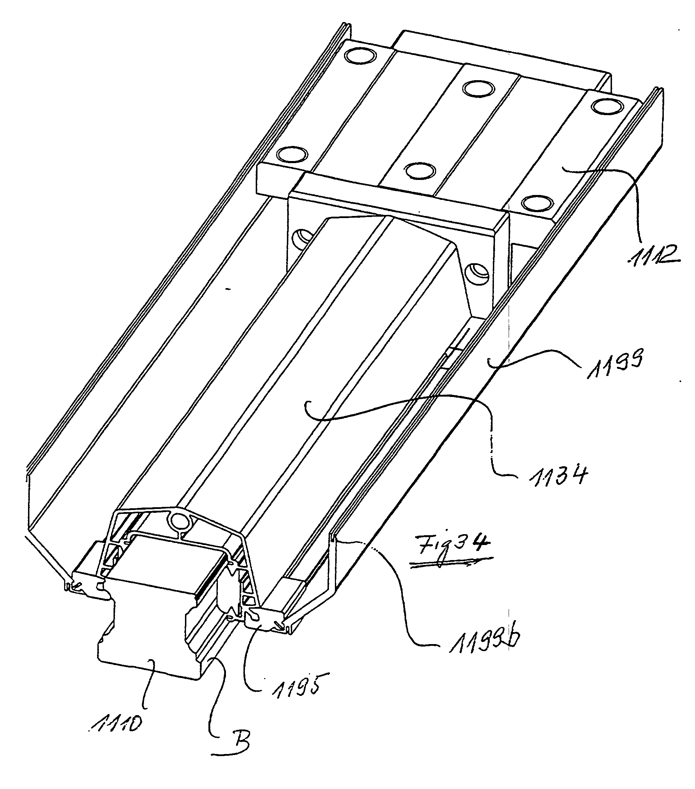

In Fig. 31 ist ein einstückiges Abdeckmittelprofil 1034 dargestellt, in seinem Aufbau ähnlich dem Abdeckmittelprofil 634 gemäß Fig. 19. Analoge Teile sind mit den gleichen Bezugszeichen versehen wie in den früheren Ausführungsbeispielen jedoch mit der jeweiligen Vorziffer 10. Als Besonderheit zu vermerken ist, daß an den Seitenteilen 1034" Halteprofile 1091 a angeformt sind, auf welche Abdeckergänzungsleisten 1093 aufgeschoben oder aufgeschnappt werden können. Diese Abdeckergänzungsleisten 1093 decken den bisher frei gelassenen Fußteil der Führungsschiene 1010 ab. Dabei kann an der Abdeckergänzungsleiste 1093 eine Dichtlippe 1093' ausgebildet sein, die auf einem Träger T der Führungsschiene als Gleitdichtung anliegen kann. Die Abdeckmittelergänzungsleiste 1093 weist gemäß Fig. 32b ein Komplementärprofil 1091b auf, welches komplementär ist zu dem Halteprofil 1091a an dem Abdeckmittelprofil 1034 (s. Fig. 32 und 32b).

Die Ergänzungsprofilleiste 1093 kann nach Wunsch angebracht, weggelassen oder abgenommen werden.

Figuren 32a und 32c zeigen, daß mit Hilfe des Halteprofils 1091 a auch Adapter 1095 an dem Abdeckmittelprofil 1034 durch Aufschieben oder Aufschnappen befestigt werden können, an denen dann Ergänzungswände 1097 oder 1099 durch Aufschieben oder Aufschnappen befestigt werden können, und zwar mittels komplementärer Profilnuten 1095a bzw. 1097a bzw. 1099a. Auf diese Weise ist es dann möglich, eine noch weitergehende Kapselung gemäß Fig. 33 zu erreichen. Die Ergänzungswände 1097 können dann bei einer Anordnung entsprechend Fig. 4 mit einem Tisch 18 bis an die Unterseite des Tisches hochreichen und gewünschtenfalls mit Dichtungen an der Tischunterseite anliegen. Zur Aufnahme solcher Dichtungen sind an den Oberkanten der Ergänzungswände 1097 Längsschlitze 1097b angeformt.

Wenn der Führungswagen 1112 gemäß Fig. 34 verbreitert ist, so kann bei sonst gleichen Dimensionen wie in Fig. 33 der Führungsschiene 1110 und des Abdeckmittelprofils 1134 eine seitliche Abdeckung des Führungswagens 1112 durch Verwendung geknickter Ergänzungswände 1199 erreicht werden, wie sich auch in Fig. 32d dargestellt sind. Zur Herstellung der Verbindung kann ein Adapter 1195 verwendet werden, analog dem Adapter 1095 aus Fig. 32a. Auch die geknickten Ergänzungswände 1199 können wieder bis zum Kontakt mit einem Tisch gemäß Fig. 4 hochgezogen und gegen den Tisch abgedichtet sein. Es sind auch an den Ergänzungswänden 1199 oben Schlitze 1199b eingeformt, in welche Längsdichtleisten eingesetzt werden können.

Gemäß Fig. 19a ist ein Gleitschuh 1233 mit Gleitflächen zur Anlage an Rollenlaufbahnen ausgeführt. Die Gleitschuhe 1233 kommen an Stelle der Gleitschuhe 633 der Fig. 16 zum Einsatz, wenn ein Führungswagen auf einer Führungsschiene durch endlose Rollenschleifen statt endloser Kugelschleifen geführt ist und an der Führungsschiene demgemäß plane Laufbahnen ausgebildet sind.

## Patentansprüche

1. Führungseinheit, umfassend
mindestens eine Führungsschiene (10), nach Wunsch eine geradlinige Führungsschiene (10), wobei diese Führungsschiene (10) eine Längsachse (X) und ein Schienenprofil mit mindestens einer Laufbahn (14) besitzt,
ferner umfassend mindestens zwei auf der mindestens einen Laufbahn (14) der Führungsschiene (10) geführte Führungswagen (12) mit einander zugekehrten Enden (22) und
ein Abdeckmittel (34) zum Abdecken der Führungsschiene (10) in mindestens einem Längsabschnitt (A) der Führungsschiene (10) zwischen den beiden einander zugekehrten Enden (22) der mindestens zwei Führungswagen (12), welches Abdeckmittel (20) an den mindestens zwei Führungswagen (12) zur gemeinsamen Bewegung mit diesen in Mitnahmeverbindung steht und wenigstens auf einem Teil seiner Längserstreckung (A) zwischen den beiden einander zugekehrten Enden (22) in Achsrichtung (X) im wesentlichen starr ausgebildet ist, wobei das Abdeckmittel (20) wenigstens auf einem Teil seiner Längserstreckung (A) ein Abdeckmittelprofil (34) bildet, welches - in einem zur Längsachse (X) orthogonalen Schnitt betrachtet - dem Schienenprofil in Abstand von diesem annähernd folgt,
**dadurch gekennzeichnet,**
**dass** - in einem zur Längsachse (X) orthogonalen Schnitt betrachtet - das Abdeckmittelprofil (34) aus mindestens zwei in Umfangsrichtung um die Längsachse (X) aufeinander folgenden Teilprofilen (34", 34', 34") zusammengesetzt ist.

2. Führungseinheit nach Anspruch 1,
**dadurch gekennzeichnet,**
**daß** das Abdeckmittel (20) einen im wesentlichen geschlossenen Profilhohlraum (11) zwischen dem Schienenprofil der Führungsschiene (10) und dem Abdeckmittelprofil (34) definiert, welcher die mindestens eine zwischen den beiden Führungswagen (12) sich erstreckende Laufbahn (14) der Führungsschiene (10) enthält.

3. Führungseinheit nach Anspruch 1,
**dadurch gekennzeichnet,**
**daß** der Profilhohlraum (11) durch Engspaltbildung und/oder Kontaktzonenbildung (bei 50) zwischen der Führungsschiene (10) und dem Abdeckmittel (20) abgeschlossen ist, nach Wunsch im wesentlichen dicht abgeschlossen ist.

4. Führungseinheit nach einem der Ansprüche 2 oder 3,
**dadurch gekennzeichnet,**
**daß** ein Basisteil (B) der Führungsschiene (10) im Längsabschnitt zwischen den einander zugekehrten Enden (22) außerhalb des Profilhohlraums (11) liegt.

5. Führungseinheit nach einem der vorhergehenden Ansprüche,
**dadurch gekennzeichnet,**
**daß** das Abdeckmittelprofil (34) - in einem Schnitt orthogonal zur Längsachse (X) betrachtet - im wesentlichen U-förmig ist und nach Wunsch nahe seinen freien U-Schenkelenden (bei 44) gegenüber der Führungsschiene (10) abgedichtet ist.

6. Führungseinheit nach einem der vorhergehenden Ansprüche,
**dadurch gekennzeichnet,**
**daß** das Abdeckmittelprofil (34) - in einem zur Längsachse (X) orthogonalen Schnitt betrachtet - in Umfangsrichtung zusammenhängend ausgebildet ist.

7. Führungseinheit nach einem der vorhergehenden Ansprüche,
**dadurch gekennzeichnet,**
**daß** in Umfangsrichtung aufeinander folgende Teilprofile (34'', 34', 34'') des Abdeckmittelprofils (34) um zur Längsachse (X) parallele Gelenkachsen (36) gelenkig miteinander verbunden sind.

8. Führungseinheit nach einem der vorhergehenden Ansprüche,
**dadurch gekennzeichnet,**
**daß** das Abdeckmittelprofil (134) aus mindestens zwei in Längsrichtung (X) aneinander anschließenden Abdeckprofilabschnitten (134a, 134b) zusammengesetzt ist.

9. Führungseinheit nach einem der vorhergehenden Ansprüche,
**dadurch gekennzeichnet,**
**daß** das Abdeckmittelprofil (34) Längenausgleichsmittel zur Anpassung an Abstandsvariationen zwischen den beiden Führungswagen (12) besitzt.

10. Führungseinheit nach einem der vorhergehenden Ansprüche,
**dadurch gekennzeichnet,**
**daß** das Abdeckmittel (20) an mindestens einem der Führungswagen (12) ein Abdeckmittelanschlußelement (26) zur Herstellung der Mitnahmeverbindung mit dem jeweiligen Führungswagen (12) aufweist.

11. Führungseinheit nach Anspruch 10,
**dadurch gekennzeichnet,**
**daß** das Abdeckmittelanschlußelement (526) zusammenhängend, nach Wunsch einstückig zusammenhängend, mit einem Abdeckmittelprofil (534) ausgebildet ist.

12. Führungseinheit nach Anspruch 10,
**dadurch gekennzeichnet,**
**daß** das Abdeckmittelanschlußelement (26) einen Mitnahmeteil (28) zur Herstellung der Mitnahmeverbindung mit dem jeweiligen Führungswagen (12) und einen Profilfassungsteil (30) zum Zusammenwirken mit einem Abdeckmittelprofil (34) aufweist.

13. Führungseinheit nach Anspruch 12,
**dadurch gekennzeichnet,**
**daß** der Profilfassungsteil (30) mit dem Abdeckmittelprofil (34) in Schiebeverbindung steht.

14. Führungseinheit nach Anspruch 13.
**dadurch gekennzeichnet,**
**daß** der Profilfassungsteil (30) zur Anlage an der Außenseite des Abdeckmittelprofils (34) ausgebildet ist.

15. Führungseinheit nach Anspruch 13 oder 14,
**dadurch gekennzeichnet,**
**daß** das Profilfassungsteil (130) zur Anlage an der Innenseite des Abdeckmittelprofils (134) ausgebildet ist.

16. Führungseinheit nach Anspruch 14,
**dadurch gekennzeichnet,**
**daß** das Abdeckmittelanschlußelement (26) zum grätschartigen Aufbringen auf das Abdeckmittelprofil (34) ausgebildet ist.

17. Führungseinheit nach Anspruch 15,
**dadurch gekennzeichnet,**
**daß** zur Sicherung des dem Profilfassungsteil (130) außen anliegenden Abdeckmittelprofils (134) auf dem Profilfassungsteil (130) ein dem Abdeckmittelprofil außen anliegendes Umklammerungsmittel vorgesehen ist.

18. Führungseinheit nach Anspruch 17,
**dadurch gekennzeichnet,**
**daß** das Umklammerungsmittel annähernd U-förmig ausgebildet ist.

19. Führungseinheit nach einem der Ansprüche 10-18,
**dadurch gekennzeichnet,**
**daß** das Abdeckmittelanschlußelement (26) als Befestigungsteil einen Befestigungsflansch (28) zum Anschrauben oder Anklipsen an einer zur Längsachse (X) im wesentlichen orthogonalen Endfläche (22) eines Führungswagens (12) aufweist.

20. Führungseinheit nach einem der Ansprüche 10-19,
**dadurch gekennzeichnet,**
**daß** an jedem von zwei aufeinander unmittelbar folgenden Führungswagen (12) an deren einander zugekehrten Enden (22) jeweils ein Abdeckmittelanschlußelement (26) angeordnet ist und daß sich zwischen den beiden Abdeckmittelanschlußelementen (26) mindestens ein gesonderter Abdeckprofilabschnitt (34) erstreckt.

21. Führungseinheit nach Anspruch 20,
**dadurch gekennzeichnet,**
**daß** der Abdeckprofilabschnitt (134a, 134b) zwischen den beiden zugehörigen Abdeckmittelanschlußelementen (126) durch ein Stabilisierungsmittel (166) stabilisiert ist.

22. Führungseinheit nach Anspruch 21,
**dadurch gekennzeichnet,**
**daß** das Stabilisierungsmittel (166) als Kupplungsmittel zwischen zweiunmittelbar aneinanderanschließenden Abdeckprofilabschnitten (134a, 134b) ausgebildet ist.

23. Führungseinheit nach einem der Ansprüche 12-22,
**dadurch gekennzeichnet,**
**daß** das Profilfassungsteil (30) mit dem Abdeckmittelprofil (34) verrastbar ist (bei 38,40 bzw. 160,162).

24. Führungseinheit nach einem der Ansprüche 9-23,
**dadurch gekennzeichnet,**
**daß** das Längenausgleichsmittel durch eine Schiebestrecke an einem Abdeckmittelanschlußelement (26) und/oder zwischen zwei aneinander anschließenden Abdeckprofilabschnitten (134a, 134b) ausgebildet ist.

25. Führungseinheit nach einem der vorhergehenden Ansprüche,
**dadurch gekennzeichnet,**
**daß** innerhalb des Abdeckmittels (20) eine Schmiermittelversorgung untergebracht ist (bei 46).

26. Führungseinheit nach Anspruch 25,
**dadurch gekennzeichnet,**
**daß** innerhalb des Abdeckmittels (20) ein Schmiermittelvorrat für Langzeitschmierung oder Lebensdauerschmierung untergebracht ist.

27. Führungseinheit nach Anspruch 25 oder 26,
**dadurch gekennzeichnet,**
**daß** innerhalb des Abdeckmittels (20) mindestens ein poröser und schmierölhaltiger Ölverteilerkörper (46) untergebracht ist.

28. Führungseinheit nach Anspruch 27,
**dadurch gekennzeichnet,**
**daß** der Ölverteilerkörper (46) in Schmierölabgabekontakt mit einer Laufbahn (14) der Führungsschiene (10) steht.

29. Führungseinheit nach einem der Ansprüche 25-28,
**dadurch gekennzeichnet,**
**daß** das Schmiermittel innerhalb des Abdeckmittels Zugang zu Schmiermittelbedarfsstellen (16) innerhalb eines Führungswagens (12) hat.

30. Führungseinheit nach einem der Ansprüche 25-29,
**dadurch gekennzeichnet,**
**daß** das Schmiermittel innerhalb des Abdeckmittels (20) Zugang zu einer Engstelle oder einer Kontaktzone (50) zwischen der Führungsschiene (10) und dem Abdeckmittel (20) hat.

31. Führungseinheit nach einem der Ansprüche 27-30,
**dadurch gekennzeichnet,**
**daß** der Ölverteilerkörper (346) in schmierölleitender Verbindung (374) mit einem Vorratsraum (372) für ungebundenes Schmieröl steht.

32. Führungseinheit nach einem der Ansprüche 27-31,
**dadurch gekennzeichnet,**
**daß** der Ölverteilerkörper (46) innerhalb des Abdeckmittelprofils (34) sich wenigstens über einen Teil von dessen Längserstreckung (A) zwischen den beiden Führungswagen (12) erstreckt.

33. Führungseinheit nach einem der vorhergehenden Ansprüche,
**dadurch gekennzeichnet,**
**daß** das Abdeckmittelprofil (34) aus Kunststoff oder Metall hergestellt ist.

34. Führungseinheit nach einem der vorhergehenden Ansprüche,
**dadurch gekennzeichnet,**
**daß** das Abdeckmittelprofil (434) von Meterware ablängbar ist.

35. Führungseinheit nach einem der vorhergehenden Ansprüche,
**dadurch gekennzeichnet,**
**daß** das Abdeckmittelprofil (534) an einem Ende kürzbar ist.

36. Führungseinheit nach einem der Ansprüche 26-35,
**dadurch gekennzeichnet,**
**daß** mindestens ein Führungswagen (12) an seinem dem jeweils anderen Führungswagen (12) zugekehrten Ende (22) ohne Dichtung gegenüber der Führungsschiene (10) ausgeführt ist.

37. Führungseinheit nach einem der vorhergehenden Ansprüche,
**dadurch gekennzeichnet,**
**dass** an dem Abdeckmittel (620) mindestens eine Gleitfläche (633) vorgesehen ist, welche in Gleiteingriff mit einer Gleitbahn (614) der Führungsschiene (610) steht.

38. Führungseinheit nach Anspruch 37,
**dadurch gekennzeichnet,**
**dass** die Gleitbahn (614) wenigstens zum Teil von einer Laufbahn gebildet ist, auf welcher ein Führungswagen (612) geführt ist.

39. Führungseinheit nach Anspruch 37,
**dadurch gekennzeichnet,**
**dass** die Gleitbahn von der beziehungsweise von den Laufbahn(en) für die Führungswagen gesondert ist.

40. Führungseinheit nach einem der Ansprüche 37-39,
**dadurch gekennzeichnet,**
**dass** das Abdeckmittel (620) in lediglich Druck übertragender Anschlagverbindung mit mindestens einem der Führungswagen (612) steht.

41. Führungseinheit nach einem der Ansprüche 37-40,
**dadurch gekennzeichnet,**
**dass** das Abdeckmittel (620) von mindestens einem der Führungswagen (612) querkraftmäßig entkoppelt ist.

42. Führungseinheit nach einem der Ansprüche 37-41,
**dadurch gekennzeichnet,**
**dass** das Abdeckmittel (620) an mindestens einem seiner Enden an einer zur Längsachse (X) orthogonalen Anschlagfläche (622) eines Führungswagens (612) quer zur Längsachse (X) beweglich anliegt.

43. Führungseinheit nach einem der Ansprüche 37-42,
**dadurch gekennzeichnet,**
**dass** das Abdeckmittel (620) unter Vorspannung an den einander zugekehrten Enden (622) der Führungswagen (612) anliegt.

44. Führungseinheit nach einem der Ansprüche 37-43,
**dadurch gekennzeichnet,**
**dass** die Gleitfläche (633) des Abdeckmittels (620) oder/und die Gleitbahn (614) der Führungsschiene (610) mit Schmiermittel versorgt ist.

45. Führungseinheit nach einem der Ansprüche 37-44,
**dadurch gekennzeichnet,**
**dass** das Abdeckmittel (620) mindestens einen Teil einer Schmiermittelversorgung für die Laufbahn (614) der Führungswagen (612) oder/und für die Gleitbahn (614) auf der Führungsschiene (610) oder/und für Funktionsteile der Führungswagen (612) enthält.

46. Führungseinheit nach einem der Ansprüche 37-45,
**dadurch gekennzeichnet,**
**dass** das Abdeckmittel (620) aus mindestens zwei in Richtung der Längsachse (X) aneinander anschließenden Abdeckmittelteilen (634, 626) besteht, welche gegen die Wirkung von Federmitteln (629) im Sinne einer Verkürzung des Abdeckmittels (620) in Richtung der Längsachse (X) relativ zueinander beweglich sind.

47. Führungseinheit nach Anspruch 46,
**dadurch gekennzeichnet,**
**dass** das Abdeckmittel (620) mindestens ein Abdeckmittelprofil (634) und mindestens ein Abdeckmittelendstück (626) umfasst, welches zur Anlage an einem Führungswagen (612) ausgebildet ist.

48. Führungseinheit nach Anspruch 47,
**dadurch gekennzeichnet,**
**dass** ein Federmittel (629) zwischen dem Abdeckmittelprofil (634) und dem Abdeckmittelendstück (626) vorgesehen ist.

49. Führungseinheit nach Anspruch 48,
**dadurch gekennzeichnet,**
**dass** das Federmittel (629) an dem Abdeckmittelendstück (626) angebracht ist.

50. Führungseinheit nach Anspruch 49,
**dadurch gekennzeichnet,**
**dass** das Federmittel (629) aus dem Material des Abdeckmittelendstücks (626) einstückig mit diesem zusammenhängend hergestellt ist.

51. Führungseinheit nach einem der Ansprüche 46-50,
**dadurch gekennzeichnet,**
**dass** das Abdeckmittel (620) aus mindestens zwei in Richtung der Längsachse (X) aufeinander folgenden Abdeckprofilabschnitten (634a, 634b) besteht und dass diese Abdeckprofilabschnitte (634a, 634b) durch ein Kupplungsstück (666) miteinander verbunden sind.

52. Führungseinheit nach Anspruch 51,
**dadurch gekennzeichnet,**
**dass** das Kupplungsstück (666) ein von den beiden Abdeckprofilabschnitten (634a, 634b) gesondertes Kupplungsstück ist.

53. Führungseinheit nach Anspruch 52,
**dadurch gekennzeichnet,**
**dass** zwischen dem Kupplungsstück (666) und mindestens einem der Abdeckprofilabschnitte (634a, 634b) ein Federmittel (629) vorgesehen ist.

54. Führungseinheit nach Anspruch 53,
**dadurch gekennzeichnet,**
**dass** das Federmittel (629) aus dem Material des Kupplungsstücks (666) einstückig mit diesem hergestellt ist.

55. Führungseinheit nach einem der vorhergehenden Ansprüche
**dadurch gekennzeichnet,**
**dass** das Abdeckmittel (620) mindestens ein Abdeckmittelprofil (634) und mindestens ein Aufsteckteil (626, 666) umfasst, welches auf das Abdeckmittelprofil (634) aufsteckbar ist.

56. Führungseinheit nach Anspruch 55.
**dadurch gekennzeichnet,**
**dass** an dem Aufsteckteil (626, 666) mindestens eine Einstecktasche ausgebildet ist, welche das zugehörige Ende eines Abdeckmittelprofils (634) aufnimmt.

57. Führungseinheit nach einem der vorhergehenden Ansprüche,
**dadurch gekennzeichnet,**
**dass** das Abdeckmittelprofil (634) als ein Hohlwandprofil ausgebildet ist und dass an dem Aufsteckteil (626, 666) mindestens ein Steckvorsprung zum Einstecken in eine Hohlprofilkammer des Hohlwandprofils angebracht ist.

58. Führungseinheit nach einem der Ansprüche 37-57,
**dadurch gekennzeichnet,**
**dass** die Gleitfläche an einem Gleitschuh (633, 657) angebracht ist, welcher an dem Abdeckmittel (620) befestigt ist.

59. Führungseinheit nach Anspruch 58,
**dadurch gekennzeichnet,**
**dass** zur Befestigung des Gleitschuhs (633) an einem Abdeckmittelprofil (634) des Abdeckmittels (620) Halteprofilmittel (635) zur Aufnahme des Gleitschuhs (633) angebracht sind.

60. Führungseinheit nach Anspruch 58 oder 59,
**dadurch gekennzeichnet,**
**dass** ein Gleitschuh (633) sich über einen wesentlichen Teil des Abstands zweier aufeinander folgender Führungswagen (612) erstreckt.

61. Führungseinheit nach Anspruch 58 oder 59,
**dadurch gekennzeichnet,**
**dass** ein Gleitschuh (633) in einem Endbereich des Abdeckmittels (620) nahe einem Führungswagen (612) angebracht ist, wobei dieser Gleitschuh (633) in Richtung der Längsachse (X) wesentlich kürzer ist als das Abdeckmittel (620).

62. Führungseinheit nach einem der Ansprüche 58, 59 und 61,
**dadurch gekennzeichnet,**
**dass** ein Gleitschuh (633, 657) in einem mittleren Bereich des Abdeckmittels (620) zwischen zwei Führungswagen (612) angeordnet ist, wobei dieser Gleitschuh (657) wesentlich kürzer ist als die Länge des Abdeckmittels (620) in Richtung der Längsachse (X).

63. Führungseinheit nach Anspruch 62,
**dadurch gekennzeichnet,**
**dass** der Gleitschuh (657) im Bereich eines Kupplungsstücks (666) zwischen zwei aufeinander folgenden, an der Bildung des Abdeckmittels (620) beteiligten Abdeckprofilabschnitten (634a, 634b) angebracht ist.

64. Führungseinheit nach einem der Ansprüche 58-63,
**dadurch gekennzeichnet,**
**dass** der Gleitschuh (633, 657) als ein Schmierkörper zum Schmieren einer Laufbahn (614) oder/und einer Gleitbahn (614) ausgebildet ist.

65. Führungseinheit nach einem der Ansprüche 58-63,
**dadurch gekennzeichnet,**
**dass** in Richtung der Längsachse (X) neben dem Gleitschuh (633, 657) mindestens ein Schmiermittelspenderkörper an dem Abdeckmittel (620) vorgesehen ist, welcher zur Schmiermittelversorgung einer Laufbahn (614) oder/und einer Gleitbahn (614) geeignet ist.

66. Führungseinheit nach einem der Ansprüche 37-65,
**dadurch gekennzeichnet,**
**dass** an dem Abdeckmittel (620) Dichtleisten (644) angebracht sind, welche in Abdichtposition gegenüber der Führungsschiene (610) angeordnet sind und zusammen mit der Führungsschiene (610) eine Kapselung für mindestens eine Laufbahn (614) oder/und mindestens eine Gleitbahn (614) bilden.

67. Führungseinheit nach einem der vorhergehenden Ansprüche,
**dadurch gekennzeichnet,**
**dass** das Abdeckmittel (620) U-förmig zum Übergreifen eines Kopfteils und kopfteilnaher Bereiche von Seitenflächen der Führungsschiene (610) ausgebildet sind, wobei ein Fußteil (B) der Führungsschiene (610) von dem Abdeckmittel (620) unbedeckt ist.

68. Führungseinheit nach einem der vorhergehenden Ansprüche,
**dadurch gekennzeichnet,**
**dass** an dem Abdeckmittel (1020) Halterungsmittel (1091a) zur Anbringung von Abdeckergänzungsmitteln (1093) vorgesehen sind.

69. Führungseinheit nach Anspruch 68,
**dadurch gekennzeichnet,**
**dass** Abdeckergänzungsmittel (1093) zur Abdeckung eines von dem Abdeckmittel (1020) unbedeckten Fußteils (B) der Führungsschiene (1010) ausgebildet ist.

70. Führungseinheit nach Anspruch 69,
**dadurch gekennzeichnet,**
**dass** das Abdeckergänzungsmittel (1093) zur Abdichtung gegenüber einem die Führungsschiene (1010) tragenden Träger (T) ausgebildet sind.

71. Führungseinheit nach Anspruch 68,
**dadurch gekennzeichnet,**
**dass** ein Abdeckergänzungsmittel (1097) zur seitlichen Abdeckung eines Führungswagens (1012) ausgebildet ist.

72. Führungseinheit nach Anspruch 71,
**dadurch gekennzeichnet,**
**dass** das Abdeckergänzungsmittel (1097) zur Abdichtung gegenüber einem durch mindestens einen Führungswagen (1012) getragenen Objekt (18), insbesondere Tisch (18), ausgebildet ist.

73. Führungseinheit nach einem der Ansprüche 68-72,
**dadurch gekennzeichnet,**
**dass** die Halterungsmittel (1091a) zur Anbringung von Abdeckergänzungsmitteln (1093) ein Halterungsprofil (1091a) an einem Abdeckmittelprofil (1034) umfassen.

74. Führungseinheit nach einem der Ansprüche 68-73,
**dadurch gekennzeichnet,**
**dass** zur Verbindung von Abdeckergänzungsmittein (1097) mit einem Abdeckmittelprofil (1034) mindestens ein Adapter (1095) vorgesehen ist, welcher mit einem Halterungsprofil (1091a) des Abdeckmittelprofils (1034) und mit einem Halterungsprofil (1097a) eines Abdeckergänzungsmittels (1097) in Eingriff bringbar ist.

75. Führungseinheit nach einem der vorhergehenden Ansprüche,
**dadurch gekennzeichnet,**
**dass** in dem Abdeckmittel (620) ein Schmiermittelkanal (615) untergebracht ist, welcher in Längsrichtung (X) der Führungsschiene (610) verläuft.

76. Führungseinheit nach Anspruch 75,
**dadurch gekennzeichnet,**
**dass** der Schmiermittelkanal (615) in Schmiermittel leitender Verbindung mit einer Schmiermittellieferstelle (D) oder/und mit einer Laufbahn (614) oder/und mit einer Gleitbahn (614) oder/und mit einer Schmiermittelanschlussöffnung mindestens eines Führungswagens (612) steht.

77. Führungseinheit nach Anspruch 76.
**dadurch gekennzeichnet,**
**dass** der Schmiermittelkanal (615) stumpf gegen einen Umgebungsbereich (622) einer Schmiermittelanschlussöffnung des Führungswagens (612) anliegt.

78. Führungseinheit nach einem der Ansprüche 75-77,
**dadurch gekennzeichnet,**
**dass** die Verbindung des Schmiermittelkanals (615) mit der Schmiermittellieferstelle (D) im Bereich eines Endstücks (626) oder/und eines Kupplungsstücks (666) hergestellt ist.

79. Führungseinheit nach einem der vorhergehenden Ansprüche,
**dadurch gekennzeichnet,**
**dass** von einem Schmiermittelverteiler (D) einer Zentralschmierung jeweils eine Schmiermittelleitung zu einem Schmiermittelkanal (615) eines Abdeckmittels (620) und zu einem Antriebssystem (671) für die Bewegung des Führungswagens (612) längs der Führungsschiene (610) führt.

80. Führungseinheit nach einem der Ansprüche 37-79,
**dadurch gekennzeichnet,**
**dass** an dem einer Endfläche (622) eines Führungswagens (612) zugekehrten Ende eines Abdeckmittels (620) Dichtmittel (631) vorgesehen sind, welche an dem jeweiligen Führungswagen (612) anliegen.

81. Führungseinheit nach einem der Ansprüche 51-80,
**dadurch gekennzeichnet,**
**dass** das Kupplungsstück (666) aus zwei identischen Formteilen (666a) zusammengesetzt ist, welche in einer zur Längsachse (X) orthogonalen Verbindungsebene (663) zusammengesetzt sind.

82. Führungseinheit nach einem der vorhergehenden Ansprüche,
**dadurch gekennzeichnet,**
**dass** das Abdeckmittel (620) ein Hohlwandprofil (634) umfasst.

83. Führungseinheit nach Anspruch 82,
**dadurch gekennzeichnet,**
**dass** in das Hohlwandprofil (634) ein Schmiermittelkanal (615) integriert ist.

84. Führungseinheit nach einem der vorhergehenden Ansprüche,
**dadurch gekennzeichnet,**
**dass** das Abdeckmittel (920) ein Abdeckmittelprofil (934) mit einer Mehrzahl von in Umfangsrichtung um die Längsachse (X) aneinander anschließenden Profilwandteilen (934', 934") umfasst, welche gelenkig miteinander verbunden sind..

85. Führungseinheit nach Anspruch 84,
**dadurch gekennzeichnet,**
**dass** einander in Umfangsrichtung benachbarte Profilwandteile (934', 934") mit Gelenkteilen (987a, 987b) ausgeführt sind, welche ein Verschwenken der Profilwandteile (934', 934'') relativ zueinander um zur Längsachse (X) parallele Gelenkachsen (P) gestatten.

86. Führungseinheit nach Anspruch 85,
**dadurch gekennzeichnet, dass** die Gelenkteile (987a, 987b) durch Verschwenken relativ zueinander in eine Verrastungsstellung bringbar sind, in welcher die Profilwandteile (934', 934") einen zur Abdeckung der Führungsschiene geeignete Profilquerschnittsform definieren.

87. Führungseinheit nach Anspruch 85 oder 86,
**dadurch gekennzeichnet,**
**dass** die Gelenkteile (987a, 987b) lösbar miteinander durch axiales Zusammenschieben oder durch Einhaken verbindbar sind.

## Claims

1. Guide unit comprising at least one guide rail (10), optionally a rectilinear guide rail (10), this guide rail (10) having a longitudinal axis (X) and a rail profile with at least one track (14), also comprising at least two guide carriages (12) guided on the at least one track (14) of the guide rail (10) with mutually facing ends (22) and a covering means (20) for covering the guide rail (10) in at least one longitudinal portion (A) of the guide rail (10) between the two mutually facing ends (22) of the at least two guide carriages (12), which covering means (20) makes a driving connection with the at least two guide carriages (12) for common movement therewith and has a substantially rigid configuration in the axial direction (X) between the two mutually facing ends (22) at least over a portion of its longitudinal dimension (A), the covering means (20), at least over a portion of its longitudinal dimension (A), forming a covering means profile (34) which approximately follows the rail profile at a distance from it - when viewed in a section orthogonal to the longitudinal axis (X), **characterised in that** - when viewed in a section orthogonal to the longitudinal axis (X), the covering means profile (34) is composed of at least two partial profiles (34", 34', 34") following one another round the longitudinal axis (X) in the circumferential direction.

2. Guide unit according to claim 1, **characterised in that** the covering means (20) defines a substantially closed profile cavity (11) between the rail profile of the guide rail (10) and the covering means profile (34) containing the at least one track (14) of the guide rail (10) extending between the two guide carriages (12).

3. Guide unit according to claim 1, **characterised in that** the profile cavity (11) is sealed, optionally substantially tightly, by formation of a narrow gap and/or contact zone (at 50) between the guide rail (10) and the covering means (20).

4. Guide unit according to either claim 2 or claim 3, **characterised in that** a base part (B) of the guide rail (10) is located outside the profile cavity (11) in the longitudinal portion between the mutually facing ends (22).

5. Guide unit according to any one of the preceding claims, **characterised in that characterised in that** the covering means profile (34) is substantially U-shaped - when viewed in a section orthogonal to the longitudinal axis (X) - and is optionally sealed from the guide rail (10) in the vicinity of the free ends of the arms of the U (at 44).

6. Guide unit according to any one of the preceding claims, **characterised in that** the covering means profile (34) has a coherent configuration in the circumferential direction - when viewed in a section orthogonal to the longitudinal axis (X).

7. Guide unit according to any one of the preceding claims, **characterised in that** partial profiles (34", 34', 34") of the covering means profile (34) following one another in the circumferential direction are articulated to one another round hinge pins (36) parallel to the longitudinal axis (X).

8. Guide unit according to any one of the preceding claims, **characterised in that** the covering means profile (134) is assembled from at least two covering profile portions (134a, 134b) adjoining one another in the longitudinal direction (X).

9. Guide unit according to any one of the preceding claims, **characterised in that** the covering means profile (34) has length compensating means for adaptation to variations in spacing between the two guide carriages (12).

10. Guide unit according to any one of the preceding claims, **characterised in that** the covering means (20), on at least one of the guide carriages (12), has a covering means joining element (26) for producing the driving connection to the respective guide carriage (12).

11. Guide unit according to claim 10, **characterised in that** the covering means joining element (526) has a coherent configuration, optionally coherent in one piece, with a covering means profile (534).

12. Guide unit according to claim 10, **characterised in that** the covering means joining element (26) has a driving part (28) for producing the driving connection to the respective guide carriage (12) and a profile gripping part (30) for interacting with a covering means profile (34).

13. Guide unit according to claim 12, **characterised in that** the profile gripping part (30) makes a sliding connection with the covering means profile (34).

14. Guide unit according to claim 13, **characterised in that** that the profile gripping part (30) is designed to rest against the exterior of the covering means profile (34).

15. Guide unit according to either claim 13 or claim 14, **characterised in that** the profile gripping part (130) is designed to rest against the interior of the covering means profile (134).

16. Guide unit according to claim 14, **characterised in that** the covering means joining element (26) is designed to straddle the covering means profile (34).

17. Guide unit according to claim 15, **characterised in that** a clasping means resting externally against the covering means profile (134) is provided for securing the covering means profile (134) resting externally against the profile gripping part (130) on the profile gripping part (130).

18. Guide unit according to claim 17, **characterised in that** the clasping means has an approximately U-shaped configuration.

19. Guide unit according to any one of claims 10 to 18, **characterised in that** that the covering means joining element (26) comprises, as a fastener, a fastening flange (28) for screwing or clipping on an end face (22) of a guide carriage (12) substantially orthogonal to the longitudinal axis (X).

20. Guide unit according to any one of claims 10 to 19, **characterised in that** a respective covering means joining element (26) is arranged on each of two guide carriages (12) immediately following one another, at the mutually facing ends (22) thereof, and **in that** at least one separate covering profile portion (34) extends between the two covering means joining elements (26).

21. Guide unit according to claim 20, **characterised in that** the covering profile portion (134a, 134b) between the two associated covering means joining elements (126) is stabilised by a stabiliser (166).

22. Guide unit according to claim 21, **characterised in that** that the stabiliser (166) is designed as a coupling means between two covering profile portions (134a, 134b) directly adjoining one another.

23. Guide unit according to any one of claims 12 to 22, **characterised in** the profile gripping part (30) can be interlocked to the covering means profile (34) at (38, 40 or 160, 162).

24. Guide unit according to any one of claims 9 to 23, **characterised in that** the length compensating means is formed by a sliding section on a covering means joining element (26) and/or between two covering profile portions (134a, 134b) adjoining one another.

25. Guide unit according to any one of the preceding claims, **characterised in that** a lubricant supply is arranged within the covering means (20) (at 46).

26. Guide unit according to claim 25, **characterised in that** a lubricant store for long-term lubrication or service-life lubrication is arranged within the covering means (20).

27. Guide unit according to either claim 25 or claim 26, **characterised in that** at least one porous, lubricant-containing oil distributor (46) is arranged within the covering means (20).

28. Guide unit according to claim 27, **characterised in that** the oil distributor (46) makes lubricant delivery contact with a track (14) of the guide rail (10).

29. Guide unit according to any one of claims 25 to 28, **characterised in that** the lubricant within the covering means has access to lubricant-demanding positions (16) within a guide carriage (12).

30. Guide unit according to any one of claims 25 to 29, **characterised in that** the lubricant within the covering means (20) has access to a narrow point or a contact zone (50) between the guide rail (10) and the covering means (20).

31. Guide unit according to any one of claims 27 to 30, **characterised in that** the oil distributor (346) makes a lubricant-conveying connection (374) with a storage space (372) for unbound lubricant.

32. Guide unit according to any one of claims 27 to 31, **characterised in that** the oil distributor (46) extends between the two guide carriages (12) at least over a portion of its longitudinal dimension (A) within the covering means profile (34).

33. Guide unit according to any one of the preceding claims, **characterised in that** the covering means profile (34) is produced from plastics material or metal.

34. Guide unit according to any one of the preceding claims, **characterised in that** the covering means profile (434) can be cut to length from piece goods.

35. Guide unit according to any one of the preceding claims, **characterised in that** the covering means profile (534) can be shortened at one end.

36. Guide unit according to any one of claims 26 to 35, **characterised in that** at least one guide carriage (12) is constructed without a seal from the guide rail (10) at its end (22) facing the other respective guide carriage (12).

37. Guide unit according to any one of the preceding claims, **characterised in that** at least one sliding face (633) which makes sliding engagement with a slideway (614) of the guide rail (610) is provided on the covering means (620).

38. Guide unit according to claim 37, **characterised in that** the slideway (614) is formed at least in part by a track on which a guide carriage (612) is guided.

39. Guide unit according to claim 37, **characterised in that** the slideway is separated from the track or tracks for the guide carriages.

40. Guide unit according to any one of claims 37 to 39, **characterised in that** the covering means (620) makes a merely pressure-transmitting contact with at least one of the guide carriages (612).

41. Guide unit according to any one of claims 37 to 40, **characterised in that** the covering means (620) is isolated in terms of transverse force from at least one of the guide carriages (612).

42. Guide unit according to any one of claims 39 to 41, **characterised in that** the covering means (620), at least at one of its ends, rests movably transversely to the longitudinal axis (X) against a stop face (622), orthogonal to the longitudinal axis (X), of a guide carriage (612).

43. Guide unit according to any one of claims 37 to 42, **characterised in that** the covering means (620) rests with a bias against the mutually facing ends (622) of the guide carriages (612).

44. Guide unit according to any one of claims 37 to 43, **characterised in that** the sliding face (633) of the covering means (620) or/and the slideway (614) of the guide rail (610) is supplied with lubricant.

45. Guide unit according to any one of claims 37 to 44, **characterised in that** the covering means (620) contains at least a part of a lubricant supply for the track (614) of the guide carriage (612) and/or for the slideway (614) on the guide rail (610) and/or for functional parts of the guide carriages (612).

46. Guide unit according to any one of claims 37 to 45, **characterised in that** the covering means (620) consists of at least two covering means parts (634, 626) which adjoin one another in the direction of the longitudinal axis (X) and are movable relative to one another in the direction of the longitudinal axis (X), in order to shorten the covering means (620), against the action of spring means (629).

47. Guide unit according to claim 46, **characterised in that** the covering means (620) comprises at least one covering means profile (634) and at least one covering means end piece (626) which is designed to rest against a guide carriage (612).

48. Guide unit according to claim 47, **characterised in that** a spring means (629) is provided between the covering means profile (634) and the covering means end piece (626).

49. Guide unit according to claim 48, **characterised in that** the spring means (629) is arranged on the covering means end piece (626).

50. Guide unit according to claim 49, **characterised in that** the spring means (629) is produced coherently from the material of the covering means end piece (626) in one piece with it.

51. Guide unit according to any one of claims 46 to 50, **characterised in that** the covering means (620) consists of at least two covering profile portions (634a, 634b) which follow one another in the direction of the longitudinal axis (X) and **in that** these covering profile portions (634a, 634b) are connected to one another by a coupling piece (666).

52. Guide unit according to claim 51, **characterised in that** the coupling piece (666) is a coupling piece which is separate from the two covering profile portions (634a, 634b).

53. Guide unit according to claim 52, **characterised in that** a spring means (629) is provided between the coupling piece (666) and at least one of the covering profile portions (634a, 634b).

54. Guide unit according to claim 53, **characterised in that** the spring means (629) is produced from the material of the coupling piece (666) in one piece with it.

55. Guide unit according to any one of the preceding claims, **characterised in that** the covering means (620) comprises at least one covering means profile (634) and at least one plug-on part (626, 666), which can be plugged onto the covering means profile (634).

56. Guide unit according to claim 55, **characterised in that** at least one plug-in pocket which receives the associated end of a covering means profile (634) is formed on the plug-on part (626, 666).

57. Guide unit according to any one of the preceding claims, **characterised in that** the covering means profile (634) is designed as a hollow wall profile and **in that** at least one plug-in projection is arranged on the plug-on part (626, 666) for plugging into a hollow profile chamber of the hollow wall profile.

58. Guide unit according to any one of claims 37 to 57, **characterised in that** the sliding face is arranged on a sliding block (633, 657) fastened on the covering means (620).

59. Guide unit according to claim 58, **characterised in that** holding profile means (635) for receiving the sliding block (633) are provided for fastening the sliding block (633) on a covering means profile (634) of the covering means (620).

60. Guide unit according to claim 58 or 59, **characterised in that** a sliding block (633) extends over a substantial part of the distance between two guide carriages (612) following one another.

61. Guide unit according to claim 58 or 59, **characterised in that** a sliding block (633) is provided close to a guide carriage (612) in an end region of the covering means (620), this sliding block (633) being substantially shorter in the direction of the longitudinal axis (X) than the covering means (620).

62. Guide unit according to any one of claims 58, 59 and 61, **characterised in that** a sliding block (633, 657) is arranged between two guide carriages (612) in a central region of the covering means (620), this sliding block (657) being substantially shorter than the length of the covering means (620) in the direction of the longitudinal axis (X).

63. Guide unit according to claim 62, **characterised in that** the sliding block (657) is provided in the region of a coupling piece (666) between two covering profile portions (634a, 634b) which follow one another and participate in the formation of the covering means (620).

64. Guide unit according to any one of claims 58 to 63, **characterised in that** the sliding block (633, 657) is designed as a lubricator for lubricating a track (614) or/and a slideway (614).

65. Guide unit according to any one of claims 58 to 63, **characterised in that** at least one lubricant dispenser which is suitable for supplying a track (614) or/and a slideway (614) with lubricant is provided on the covering means (620) next to the sliding block (633, 657) in the direction of the longitudinal axis (X).

66. Guide unit according to any one of claims 37 to 65, **characterised in that** the covering means (620) is provided with sealing strips (644) which are arranged opposite the guide rail (610) in the sealing position and, together with the guide rail (610), form an enclosure for at least one track (614) or/and at least one slideway (614).

67. Guide unit according to any one of the preceding claims, **characterised in that** the covering means (620) has a U-shaped configuration for overlapping a head part and regions of lateral faces of the guide rail (610) close to the head part, a foot part (B) of the guide rail (610) not being covered by the covering means (620).

68. Guide unit according to any one of the preceding claims, **characterised in that** holding means (1091a) are provided for the mounting of covering supplements (1093) on the covering means (1020).

69. Guide unit according to claim 68, **characterised in that** the covering supplement (1093) is designed to cover a foot part (B) of the guide rail (1010) not covered by the covering means (1020).

70. Guide unit according to claim 69, **characterised in that** the covering supplement (1093) is designed as a seal from a carrier (T) carrying the guide rail (1010).

71. Guide unit according to claim 68, **characterised in that** a covering supplement (1097) is designed to cover the sides of a guide carriage (1012).

72. Guide unit according to claim 71, **characterised in that** the covering supplement (1097) is designed as a seal from an object (18), in particular a table (18), carried by at least one guide carriage (1012).

73. Guide unit according to any one of claims 68 to 72, **characterised in that** the holding means (1091a) comprise a holding profile (1091a) on a covering means profile (1034) for the mounting of covering supplements (1093).

74. Guide unit according to any one of claims 68 to 73, **characterised in that** at least one adapter (1095) which can be engaged with a holding profile (1091a) of the covering means profile (1034) and with a holding profile (1097a) of a covering supplement (1097) is provided for connecting covering supplements (1097) to a covering means profile (1034).

75. Guide unit according to any one of the preceding claims, **characterised in that** a lubricant duct (615) extending in the longitudinal direction (X) of the guide rail (610) is provided in the covering means (620).

76. Guide unit according to claim 75, **characterised in that** the lubricant duct (615) makes a lubricant-conveying connection with a lubricant delivery point (D) or/and with a track (614) or/and with a slideway (614) or/and with a lubricant joining orifice of at least one guide carriage (612).

77. Guide unit according to claim 76, **characterised in that** the lubricant duct (615) rests bluntly against a surrounding region (622) of a lubricant joining orifice of the guide carriage (612).

78. Guide unit according to any one of claims 75 to 77, **characterised in that** the connection between the lubricant duct (615) and the lubricant delivery point (D) is produced in the region of an end piece (626) or/and a coupling piece (666).

79. Guide unit according to any one of the preceding claims, **characterised in that** a respective lubricant pipe leads from a lubricant distributor (D) of a central lubrication system to a lubricant duct (615) of a covering means (620) and to a drive system (671) for the movement of the guide carriage (612) along the guide rail (610).

80. Guide unit according to any one of claims 37 to 79, **characterised in that** sealing means (631) which rest against the respective guide carriage (612) are provided at the end of a covering means (620) facing an end face (622) of a guide carriage (612).

81. Guide unit according to any one of claims 51 to 80, **characterised in that** the coupling piece (666) is assembled from two identical mouldings (666a) which are assembled in a connecting plane (663) orthogonal to the longitudinal axis (X).

82. Guide unit according to any one of the preceding claims, **characterised in that** the covering means (620) comprises a hollow wall profile (634).

83. Guide unit according to claim 82, **characterised in that** a lubricant duct (615) is integrated into the hollow wall profile (634).

84. Guide unit according to any one of the preceding claims, **characterised in that** the covering means (920) comprises a covering means profile (934) with a plurality of profile wall parts (934', 934") which adjoin one another in the circumferential direction round the longitudinal axis (X) and are articulated to one another.

85. Guide unit according to claim 84, **characterised in that** profile wall parts (934', 934") adjacent to one another in the circumferential direction are constructed with hinge parts (987a, 987b) to allow the profile wall parts (934', 934") to pivot relative to one another round hinge axes (P) parallel to the longitudinal axis (X).

86. Guide unit according to claim 85, **characterised in that** the hinge parts (987a, 987b) can be pivoted relative to one another and brought into an interlocking position in which the profile wall parts (934', 934") define a profile cross-sectional shape suitable for covering the guide rail.

87. Guide unit according to claim 85 or 86, **characterised in that** the hinge parts (987a, 987b) can be connected detachably to one another by being pushed together axially or by hooking.

## Revendications

1. Unité de guidage, comportant
au moins un rail de guidage (10), au besoin un rail de guidage rectiligne (10), ce rail de guidage (10) ayant un axe longitudinal (X) et un profil de rail avec au moins une glissière (14),
comportant en outre au moins deux chariots de guidage (12), guidés sur ladite au moins une glissière (14) du rail de guidage (10) et munis d'extrémités (22) orientées l'une vers l'autre,
un moyen de recouvrement (34) destiné à recouvrir le rail de guidage (10) sur au moins un tronçon longitudinal (A) du rail de guidage (10) entre les deux extrémités (22) orientées l'une vers l'autre desdits au moins deux chariots de guidage (12), lequel moyen de recouvrement (20), au niveau desdits au moins deux chariots de guidage (12), est relié en entraînement avec ceux-ci en vue d'un déplacement conjoint et est réalisé sensiblement rigide dans le sens axial (X) au moins sur une partie de son étendue longitudinale (A) entre les deux extrémités (22) orientées l'une vers l'autre, le moyen de recouvrement (20) formant au moins sur une partie de sa longueur (A) un profilé de recouvrement (34), qui - par référence à une coupe orthogonale à l'axe longitudinal (X) - suit approximativement le profil du rail à distance de celui-ci,
**caractérisée en ce que** - par référence à une coupe orthogonale à l'axe longitudinal (X) - le profilé de recouvrement (34) est formé par au moins deux profilés partiels (34", 34', 34") consécutifs dans le sens périphérique autour de l'axe longitudinal (X).

2. Unité de guidage selon la revendication 1, **caractérisée en ce que** le moyen de recouvrement (20) définit une cavité profilée (11) sensiblement fermée entre le profil du rail de guidage (10) et le profilé de recouvrement (34), laquelle contient ladite au moins une glissière (14) du rail de guidage (10), qui s'étend entre les deux chariots de guidage (12).

3. Unité de guidage selon la revendication 1, **caractérisée en ce que** la cavité profilée (11) est fermée, au besoin de manière étanche, entre le rail de guidage (10) et le moyen de recouvrement (20), par la formation d'une fente étroite et/ou la formation d'une zone de contact (en 50).

4. Unité de guidage selon l'une des revendications 2 ou 3, **caractérisée en ce qu'**une partie de base (B) du rail de guidage (10) est située à l'extérieur de la cavité profilée (11) dans le tronçon longitudinal entre les deux extrémités (22) orientées l'une vers l'autre.

5. Unité de guidage selon l'une des revendications précédentes, **caractérisée en ce que** le profilé de recouvrement (34) - par référence à une coupe orthogonale à l'axe longitudinal (X) - est réalisé sensiblement en forme de U et, au besoin, est rendu étanche par rapport au rail de guidage (10) à proximité de ses extrémités libres des branches du U (en 44).

6. Unité de guidage selon l'une des revendications précédentes, **caractérisée en ce que** le profilé de recouvrement (34) - par référence à une coupe orthogonale à l'axe longitudinal (X) - est réalisé de manière continue dans le sens périphérique.

7. Unité de guidage selon l'une des revendications précédentes, **caractérisée en ce que** des profilés partiels (34", 34', 34"), consécutifs dans le sens périphérique, du profilé de recouvrement (34) sont assemblés entre eux de manière articulée autour d'axes d'articulation (36) parallèles à l'axe longitudinal (X).

8. Unité de guidage selon l'une des revendications précédentes, **caractérisée en ce que** le profilé de recouvrement (134) est formé par au moins deux tronçons de profilé de recouvrement (134a, 134b) adjacents dans le sens longitudinal (X).

9. Unité de guidage selon l'une des revendications précédentes, **caractérisée en ce que** le profilé de recouvrement (34) comporte des moyens de compensation de longueur en vue d'une adaptation aux variations de distance entre les deux chariots de guidage (12).

10. Unité de guidage selon l'une des revendications précédentes, **caractérisée en ce que** le moyen de recouvrement (20) comporte sur au moins un des chariots de guidage (12) un élément de raccordement (26) du moyen de recouvrement pour la réalisation de la liaison en entraînement avec le chariot de guidage (12) concerné.

11. Unité de guidage selon la revendication 10, **caractérisée en ce que** l'élément de raccordement (526) du moyen de recouvrement est réalisé avec un profilé de recouvrement (534), si nécessaire contigu d'un seul tenant.

12. Unité de guidage selon la revendication 10, **caractérisée en ce que** l'élément de raccordement (26) du moyen de recouvrement comporte un élément d'entraînement (28) pour la réalisation de la liaison en entraînement avec le chariot de guidage (12) concerné et un élément de support profilé (30) prévu pour coopérer avec un profilé de recouvrement (34).

13. Unité de guidage selon la revendication 12, **caractérisée en ce que** l'élément de support profilé (30) est lié en coulissement avec le profilé de recouvrement (34).

14. Unité de guidage selon la revendication 13, **caractérisée en ce que** l'élément de support profilé (30) est conformé pour prendre appui sur la face extérieure du profilé de recouvrement (34).

15. Unité de guidage selon la revendication 13 ou 14, **caractérisée en ce que** l'élément de support profilé (130) est conformé pour prendre appui sur la face intérieure du profilé de recouvrement (134).

16. Unité de guidage selon la revendication 14, **caractérisée en ce que** l'élément de raccordement (26) du moyen de recouvrement est conformé pour être posé à branches écartées sur le profilé de recouvrement (34).

17. Unité de guidage selon la revendication 15, **caractérisée en ce qu'**un moyen de serrage, en appui à l'extérieur sur le profilé de recouvrement, est prévu pour bloquer sur l'élément de support profilé (130) le profilé de recouvrement (134) en appui à l'extérieur sur l'élément de support profilé (130).

18. Unité de guidage selon la revendication 17, **caractérisée en ce que** le moyen de serrage est réalisé pratiquement en forme de U.

19. Unité de guidage selon l'une des revendications 10 à 18, **caractérisée en ce que** l'élément de raccordement (26) du moyen de recouvrement comporte, comme élément de fixation, une bride de fixation (28), destinée à être vissée ou clipsée sur une surface d'extrémité (22), sensiblement orthogonale à l'axe longitudinal (X), d'un chariot de guidage (12).

20. Unité de guidage selon l'une des revendications 10 à 19, **caractérisée en ce que**, au niveau de chacun des deux chariots de guidage (12), directement consécutifs, un élément de raccordement (26) du moyen de recouvrement est disposé contre chacune des extrémités (22) orientées l'une vers l'autre desdits chariots de guidage, et **en ce qu'**entre les deux éléments de raccordement (26) du moyen de recouvrement s'étend au moins un tronçon de profilé de recouvrement (34) séparé.

21. Unité de guidage selon la revendication 20, **caractérisée en ce que** le tronçon du profilé de recouvrement (134a, 1 34b) est stabilisé par un moyen de stabilisation (166) entre les deux éléments de raccordement associés (126) du moyen de recouvrement.

22. Unité de guidage selon la revendication 21, **caractérisée en ce que** le moyen de stabilisation (166) est réalisé sous forme de moyen de couplage entre les deux tronçons de profilé de recouvrement (134a, 134b) directement adjacents.

23. Unité de guidage selon l'une des revendications 12 à 22, **caractérisée en ce que** l'élément de support profilé (30) peut être bloqué (en 38, 40 ou 160, 162) sur le profilé de recouvrement (34).

24. Unité de guidage selon l'une des revendications 9 à 23, **caractérisée en ce que** le moyen de compensation de longueur est formé par un tronçon coulissant sur un élément de raccordement (26) du moyen de recouvrement et/ou entre deux tronçons de profilé de recouvrement (134a, 134b) directement adjacents.

25. Unité de guidage selon l'une des revendications précédentes, **caractérisée en ce qu'**une alimentation en lubrifiant est logée (en 46) à l'intérieur du moyen de recouvrement (20).

26. Unité de guidage selon la revendication 25, **caractérisée en ce qu'**une réserve de lubrifiant pour lubrification à long terme ou une lubrification à vie est logée à l'intérieur du moyen de recouvrement (20).

27. Unité de guidage selon la revendication 25 ou 26, **caractérisée en ce qu'**au moins un corps de distribution d'huile (46) poreux et contenant de l'huile est logé à l'intérieur du moyen de recouvrement (20).

28. Unité de guidage selon la revendication 27, **caractérisée en ce que** le corps de distribution d'huile (46) est en contact avec une glissière (14) du rail de guidage (10) pour y distribuer l'huile.

29. Unité de guidage selon l'une des revendications 25 à 28, **caractérisée en ce que** le lubrifiant accède à l'intérieur du moyen de recouvrement à des zones à lubrifier (16) à l'intérieur d'un chariot de guidage (12).

30. Unité de guidage selon l'une des revendications 25 à 29, **caractérisée en ce que** le lubrifiant accède à l'intérieur du moyen de recouvrement dans une zone étroite ou une zone de contact (50) entre le rail de guidage (10) et le moyen de recouvrement (20).

31. Unité de guidage selon l'une des revendications 27 à 30, **caractérisée en ce que** le corps de distribution d'huile (346) est relié par une conduite d'huile de lubrification (374) à une réserve (372) pour huile de lubrification non combinée.

32. Unité de guidage selon l'une des revendications 27 à 31, **caractérisée en ce que** le corps de distribution d'huile (46) s'étend à l'intérieur du profilé de recouvrement (34) sur au moins une partie de l'étendue longitudinale (A) de celui-ci entre les deux chariots de guidage (12).

33. Unité de guidage selon l'une des revendications précédentes, **caractérisée en ce que** le profilé de recouvrement (34) est réalisé en matière plastique ou en métal.

34. Unité de guidage selon l'une des revendications précédentes, **caractérisée en ce que** le profilé de recouvrement (434) est coupé à longueur dans un produit au mètre.

35. Unité de guidage selon l'une des revendications précédentes, **caractérisée en ce que** le profilé de recouvrement (534) peut être raccourci à une extrémité.

36. Unité de guidage selon l'une des revendications 26 à 35, **caractérisée en ce qu'**au moins un chariot de guidage (12), au niveau de son extrémité (22) orientée vers l'autre chariot de guidage (12), est réalisé sans étanchéité par rapport au rail de guidage (10).

37. Unité de guidage selon l'une des revendications précédentes, **caractérisée en ce qu'**il est prévu sur le moyen de recouvrement (620) au moins une surface de glissement (633), qui est en prise par glissement avec une voie de glissement (614) du rail de guidage (610).

38. Unité de guidage selon la revendication 37, **caractérisée en ce que** la voie de glissement (614) est formée au moins en partie par une glissière, sur laquelle est guidé un chariot de guidage (612).

39. Unité de guidage selon la revendication 37, **caractérisée en ce que** la voie de glissement est séparée de la ou des glissière(s) pour les chariots de guidage.

40. Unité de guidage selon l'une des revendications 37 à 39, **caractérisée en ce que** le moyen de recouvrement (620) est en liaison de butée par seule transmission de poussée, avec au moins un des chariots de guidage (612).

41. Unité de guidage selon l'une des revendications 37 à 40, **caractérisée en ce que** le moyen de recouvrement (620) est découplé, en ce qui concerne les forces transversales, d'au moins un des chariots de guidage (612).

42. Unité de guidage selon l'une des revendications 37 à 41, **caractérisée en ce que** le moyen de recouvrement (620), au niveau d'au moins une de ses extrémités, est en appui, avec mobilité transversalement à l'axe longitudinal (X), contre une surface de butée (622), orthogonale à l'axe longitudinal (X), d'un chariot de guidage (612).

43. Unité de guidage selon l'une des revendications 37 à 42, **caractérisée en ce que** le moyen de recouvrement (620) est en appui sous précontrainte contre les extrémités (622), orientées l'une vers l'autre, du chariot de guidage (612).

44. Unité de guidage selon l'une des revendications 37 à 43, **caractérisée en ce que** la surface de glissement (633) du moyen de recouvrement (620) et/ou la voie de glissement (614) du rail de guidage (610) reçoivent du lubrifiant.

45. Unité de guidage selon l'une des revendications 37 à 44, **caractérisée en ce que** le moyen de recouvrement (620) contient au moins une partie d'une alimentation en lubrifiant pour la glissière (614) des chariots de guidage (612) et/ou pour la voie de glissement (614) sur le rail de guidage (610) et/ou pour des éléments fonctionnels des chariots de guidage (612).

46. Unité de guidage selon l'une des revendications 37 à 45, **caractérisée en ce que** le moyen de recouvrement (620) est formé par au moins deux parties de recouvrement (634, 626) adjacentes dans la direction de l'axe longitudinal (X), lesquelles sont mobiles l'une par rapport à l'autre dans la direction de l'axe longitudinal (X) à l'encontre de l'action de moyens à ressorts (629), dans le sens d'un raccourcissement du moyen de recouvrement (620).

47. Unité de guidage selon la revendication 46, **caractérisée en ce que** le moyen de recouvrement (620) comporte au moins un profilé de recouvrement (634) et au moins un élément d'extrémité (626), qui est conformé pour venir en appui contre un chariot de guidage (612).

48. Unité de guidage selon la revendication 47, **caractérisée en ce qu'**un moyen à ressort (629) est prévu entre le profilé de recouvrement (634) et l'élément d'extrémité (626) du moyen de recouvrement.

49. Unité de guidage selon la revendication 48, **caractérisée en ce que** le moyen à ressort (629) est disposé sur l'élément d'extrémité (626) du moyen de recouvrement.

50. Unité de guidage selon la revendication 49, **caractérisée en ce que** le moyen à ressort (629) est réalisé dans le matériau de l'élément d'extrémité (626) du moyen de recouvrement et d'un seul tenant avec celui-ci.

51. Unité de guidage selon l'une des revendications 46 à 50, **caractérisée en ce que** le moyen de recouvrement (620) est formé par au moins deux tronçons de profilé de recouvrement (634a, 634b), consécutifs dans la direction de l'axe longitudinal (X), et **en ce que** ces tronçons de profilé de recouvrement (634a, 634b) sont assemblés l'un à l'autre par un élément de couplage (666).

52. Unité de guidage selon la revendication 51, **caractérisée en ce que** l'élément de couplage (666) est un élément de couplage séparé des deux tronçons de profilé de recouvrement (634a, 634b).

53. Unité de guidage selon la revendication 52, **caractérisée en ce qu'**un moyen à ressort (629) est prévu entre l'élément de couplage (666) et au moins un des tronçons de profilé de recouvrement (634a, 634b).

54. Unité de guidage selon la revendication 53, **caractérisée en ce que** le moyen à ressort (629) est réalisé dans le matériau de l'élément de couplage (666) d'un seul tenant avec celui-ci.

55. Unité de guidage selon l'une des revendications précédentes, **caractérisée en ce que** le moyen de recouvrement (620) comporte au moins un profilé de recouvrement (634) et au moins un élément rapporté (626, 666) emboîté sur le profilé de recouvrement (634).

56. Unité de guidage selon la revendication 55, **caractérisée en ce que** sur l'élément rapporté (626, 666) est réalisé au moins une poche d'emboîtement destinée à recevoir l'extrémité correspondante d'un profilé de recouvrement (634).

57. Unité de guidage selon l'une des revendications précédentes, **caractérisée en ce que** le profilé de recouvrement (634) est réalisé sous forme de profilé à paroi creuse et **en ce que** sur l'élément rapporté (626, 666) est réalisée au moins une saillie à enficher dans une chambre du profilé à paroi creuse.

58. Unité de guidage selon l'une des revendications 37 à 57, **caractérisée en ce que** la surface de glissement est aménagée sur un patin (633, 657) qui est fixé sur le moyen de recouvrement (620).

59. Unité de guidage selon la revendication 58, **caractérisée en ce que** pour la fixation du patin (633) sur un profilé de recouvrement (634) du moyen de recouvrement (620), il est prévu des moyens profilés de retenue (635) destinés à recevoir le patin (633).

60. Unité de guidage selon la revendication 58 ou 59, **caractérisée en ce qu'**un patin (633) s'étend sur une grande partie de la distance entre deux chariots de guidage (612) consécutifs.

61. Unité de guidage selon la revendication 58 ou 59, **caractérisée en ce qu'**un patin (633) est disposé dans une zone d'extrémité du moyen de recouvrement (620) à proximité d'un chariot de guidage (612), ledit patin (633) étant nettement plus court que le moyen de recouvrement (620) dans la direction de l'axe longitudinal (X).

62. Unité de guidage selon l'une des revendications 58, 59 et 61, **caractérisée en ce qu'**un patin (633, 657) est disposé dans une partie centrale du moyen de recouvrement (620) entre deux chariots de guidage (612), ledit patin (657) étant nettement plus court que la longueur du moyen de recouvrement (620) dans la direction de l'axe longitudinal (X).

63. Unité de guidage selon la revendication 62, **caractérisée en ce que** le patin (657) est disposé dans la zone d'un élément de couplage (666) entre deux tronçons de profilé de recouvrement (634a, 634b) consécutifs, contribuant à la formation du moyen de recouvrement (620).

64. Unité de guidage selon l'une des revendications 58 à 63, **caractérisée en ce que** le patin (633, 657) est réalisé sous forme de corps lubrifiant destiné à lubrifier une glissière (614) et/ou une voie de glissement (614).

65. Unité de guidage selon l'une des revendications 58 à 63, **caractérisée en ce que** dans la direction de l'axe longitudinal (X) sur le côté du patin (633, 657) il est prévu au moins un corps de distribution de lubrifiant situé contre le moyen de recouvrement (620), lequel est apte à alimenter en lubrifiant une glissière (614) et/ou une voie de glissement (614).

66. Unité de guidage selon l'une des revendications 37 à 65, **caractérisée en ce que** sur le moyen de recouvrement (620) sont disposées des baguettes d'étanchéité (644), qui sont disposées en position d'étanchéité par rapport au rail de guidage (610) et forment conjointement avec le rail de guidage (610) un encapsulage pour au moins une glissière (614) et/ou au moins une voie de glissement (614).

67. Unité de guidage selon l'une des revendications précédentes, **caractérisée en ce que** le moyen de recouvrement (620) est réalisé en forme de U pour s'engager au-dessus d'une partie supérieure et de zones proches de la partie supérieure des parois latérales du rail de guidage (610), une partie de base (B) du rail de guidage (610) n'étant pas recouverte par le moyen de recouvrement (620).

68. Unité de guidage selon l'une des revendications précédentes, **caractérisée en ce que** des moyens de retenue (1091a) sont prévus sur le moyen de recouvrement (1020) pour la pose de moyens complétant le recouvrement (1093).

69. Unité de guidage selon la revendication 68, **caractérisée en ce que** les moyens complétant le recouvrement (1093) sont conformés pour recouvrir une partie de base (B) du rail de guidage (1010), non recouverte par le moyen de recouvrement (1020).

70. Unité de guidage selon la revendication 69, **caractérisée en ce que** les moyens complétant le recouvrement (1093) sont conformés pour assurer l'étanchéité par rapport à un support (T) supportant le rail de guidage (1010).

71. Unité de guidage selon la revendication 68, **caractérisée en ce qu'**un moyen complétant le recouvrement (1097) est conformé pour recouvrir latéralement un chariot de guidage (1012).

72. Unité de guidage selon la revendication 71, **caractérisée en ce que** le moyen complétant le recouvrement (1097) est conformé pour assurer l'étanchéité par rapport à un objet (18), en particulier une table (18), porté par au moins un chariot de guidage (1012).

73. Unité de guidage selon l'une des revendications 68 à 72, **caractérisée en ce que** les moyens de retenue (1091a), pour la pose des moyens complétant le recouvrement (1093), sont formés par un profilé de retenue (1091a) placé sur un profilé de recouvrement (1034).

74. Unité de guidage selon l'une des revendications 68 à 73, **caractérisée en ce que** pour assembler les moyens complétant le recouvrement (1097) avec un profilé de recouvrement (1034), il est prévu au moins un adaptateur (1095), qui peut être amené en prise avec un profilé de retenue (1091a) du profilé de recouvrement (1034) et avec un profilé de retenue (1097a) d'un moyen complétant le recouvrement (1097).

75. Unité de guidage selon l'une des revendications précédentes, **caractérisée en ce que** dans le moyen de recouvrement (620) est ménagé un canal de lubrifiant (615), qui s'étend dans le sens longitudinal (X) du rail de guidage (610).

76. Unité de guidage selon la revendication 75, **caractérisée en ce que** le canal de lubrifiant (615) est en liaison de conduite du lubrifiant avec une zone de distribution du lubrifiant (D) et/ou avec une glissière (614) et/ou avec une voie de glissement (614) et/ou avec un orifice de raccordement pour lubrifiant d'au moins un chariot de guidage (612).

77. Unité de guidage selon la revendication 76, **caractérisée en ce que** le canal de lubrifiant (615) est abouté à une zone environnante (622) d'un orifice de raccordement pour lubrifiant du chariot de guidage (612).

78. Unité de guidage selon l'une des revendications 75 à 77, **caractérisée en ce que** la liaison entre le canal de lubrifiant (615) et la zone de distribution de lubrifiant (D) est réalisée dans la zone d'un élément d'extrémité (626) et/ou d'un élément de couplage (666).

79. Unité de guidage selon l'une des revendications précédentes, **caractérisée en ce qu'**à partir d'un distributeur de lubrifiant (D) d'une lubrification centrale part respectivement une conduite de lubrifiant vers un canal de lubrifiant (615) d'un moyen de recouvrement (620) et vers un système d'entraînement (671) pour le mouvement du chariot de guidage (612) le long du rail de guidage (610).

80. Unité de guidage selon l'une des revendications 37 à 79, **caractérisée en ce qu'**à l'extrémité d'un moyen de recouvrement (620), orientée vers une surface d'extrémité (622) d'un chariot de guidage (612), sont prévus des moyens d'étanchéité (631), qui sont en appui contre le chariot de guidage (612) concerné.

81. Unité de guidage selon l'une des revendications 51 à 80, **caractérisée en ce que** l'élément de couplage (666) est formé par deux parties moulées (666a) identiques, qui sont assemblées dans un plan de joint (663) orthogonal à l'axe longitudinal (X).

82. Unité de guidage selon l'une des revendications précédentes, **caractérisée en ce que** le moyen de recouvrement (620) est formé par un profilé à paroi creuse (634).

83. Unité de guidage selon la revendication 82, **caractérisée en ce qu'**un canal de lubrifiant (615) est intégré dans le profilé à paroi creuse (634).

84. Unité de guidage selon l'une des revendications précédentes, **caractérisée en ce que** le moyen de recouvrement (920) est formé par un profilé de recouvrement (934) avec une pluralité d'éléments de paroi (934', 934"), adjacents dans le sens périphérique autour de l'axe longitudinal (X) et assemblés les uns aux autres de manière articulée.

85. Unité de guidage selon la revendication 84, **caractérisée en ce que** les éléments de paroi (934', 934"), adjacents dans le sens périphérique, sont réalisés avec des éléments articulés (987a, 987b), qui permettent un pivotement des éléments de paroi (934', 934") les uns par rapport aux autres autour d'axes d'articulation (P) parallèles à l'axe longitudinal (X).

86. Unité de guidage selon la revendication 85, **caractérisée en ce que** les éléments articulés (987a, 987b) peuvent être amenés par pivotement les uns par rapport aux autres dans une position de verrouillage, dans laquelle les éléments de paroi (934', 934") définissent une forme de section profilée adaptée au recouvrement du rail de guidage.

87. Unité de guidage selon la revendication 85 ou 86, **caractérisée en ce que** les éléments articulés (987a, 987b) peuvent être assemblés entre eux de manière séparable par un mouvement télescopique axial ou par accrochage.
